# EUROPÄISCHE PATENTSCHRIFT

(11) **EP 1 812 621 B1**
(45) Veröffentlichungstag und Bekanntmachung des Hinweises auf die Patenterteilung: **06.03.2019**
(21) Anmeldenummer: 05809776.7
(22) Anmeldetag: 09.11.2005
(51) Int. Cl.: C23C 22/34, C23C 22/36, C09D 5/12

(54) **VERFAHREN ZUR BESCHICHTUNG VON METALLISCHEN OBERFLÄCHEN MIT EINER WÄSSERIGEN SILAN/ SILANOL/ SILOXAN/ POLYSILOXAN ENTHALTENDEN ZUSAMMENSETZUNG**
METHOD FOR COATING METALLIC SURFACES WITH AN AQUEOUS SILANE /SILANOL /SILOXANE /POLYSILOXANE BASED COMPOSITION
PROCEDE POUR REVÊTIR DES SURFACES METALLIQUES AU MOYEN D'UNE COMPOSITION AQUEUSE A BASE DE SILANE /SILANOL /SILOXANE /POLYSILOXANE

(30) Priorität: 10.11.2004 US 985652; 04.04.2005 DE 102005015573; 04.04.2005 DE 102005015576; 04.04.2005 DE 102005015575
(43) Veröffentlichungstag der Anmeldung: 01.08.2007
(73) Patentinhaber: Chemetall GmbH, 60487 Frankfurt am Main (DE)
(72) Erfinder: KOLBERG, Thomas, 64646 Heppenheim (DE); WALTER, Manfred, 63589 Linsengericht (DE); SCHUBACH, Peter, 61130 Nidderau (DE)
(74) Vertreter: BASF IP Association
(86) Internationale Anmeldenummer: PCT/EP2005/011953
(87) Internationale Veröffentlichungsnummer: WO 2006/050916

(56) Entgegenhaltungen:
- EP-A- 0 949 353
- EP-A- 1 130 132
- EP-A- 1 146 144
- EP-A- 1 426 466
- EP-A- 1 433 877
- EP-A- 1 433 878
- EP-A- 1 455 002
- WO-A-01/86016
- DE-A1- 10 149 148
- GB-A- 1 528 715

## Beschreibung

Die Erfindung betrifft ein Verfahren zur Beschichtung von metallischen Oberflächen mit einer wässerigen Zusammensetzung, die mindestens ein Silan oder/und eine hierzu verwandte Silicium-haltige Verbindung und weitere Komponenten enthält, die ohne Trocknung der Beschichtung z.B. bei Temperaturen oberhalb 70 °C weiterbehandelt wird.
Die bislang am häufigsten eingesetzten Verfahren zur Behandlung von metallischen Oberflächen, insbesondere von Teilen, Band (Coil) oder Bandabschnitten aus mindestens einem metallischen Werkstoff, bzw. zur Vorbehandlung von metallischen Oberflächen vor der Lackierung von metallischen Oberflächen basieren vielfach einerseits auf dem Einsatz von Chrom(VI)-Verbindungen gegebenenfalls zusammen mit diversen Zusatzstoffen oder andererseits auf Phosphaten wie z.B. ZinkManganNickel-Phosphaten gegebenenfalls zusammen mit diversen Zusatzstoffen.
Aufgrund der toxikologischen und ökologischen Risiken, die insbesondere Chromat-haltige Verfahren oder Nickel-haltige Verfahren mit sich bringen, wird schon seit vielen Jahren nach Alternativen zu diesen Verfahren auf allen Gebieten der Oberflächentechnik für metallische Substrate gesucht, aber trotzdem immer wieder gefunden, dass bei vielen Anwendungen völlig Chromat-freie oder Nickel-freie Verfahren nicht 100 % des Leistungsspektrums erfüllen oder nicht mit der gewünschten Sicherheit erfüllen. Es wird dann versucht, die Chromatgehalte bzw. Nickelgehalte möglichst gering zu halten und so weit als möglich Cr⁶⁺ durch Cr³⁺ zu ersetzen. Es sind insbesondere in der Automobilindustrie z.B. für die Vorbehandlung von Karosserien vor der Lackierung hochwertige Phosphatierungen im Einsatz, die den Korrosionsschutz der Automobile auf einem hohen Qualitätsstand gehalten haben. Hierzu werden üblicherweise ZinkManganNickel-Phosphatierungen eingesetzt. Trotz vieler Jahre an Forschung und Entwicklung ist es nicht gelungen, für Multimetall-Anwendungen wie oft bei Karosserien, wo in Europa typischerweise im gleichen Bad metallische Oberflächen von Stahl, von verzinktem Stahl und Aluminium bzw. Aluminiumlegierungen vorbehandelt werden, ohne deutliche Qualitätseinschränkungen Nickel-frei zu phosphatieren. Da jetzt aber Nickel-Gehalte, selbst wenn sie vergleichsweise gering sind, in absehbarer Zeit toxikologisch bedenklicher eingestuft werden, stellt sich die Frage, ob mit anderen chemischen Verfahren ein gleichwertiger Korrosionsschutz erzielt werden kann.

Der Einsatz z.B. von Silanen/Silanolen in wässerigen Zusammensetzungen zur Herstellung von Siloxan/Polysiloxan-reichen korrosionsschützenden Beschichtungen ist grundsätzlich bekannt. Der Einfachheit halber wird bei Silan/Silanol/Siloxan/Polysiloxan im folgenden oft nur von Silan gesprochen. Diese Beschichtungen haben sich bewährt, jedoch sind die Verfahren zur Beschichtung mit einer vorwiegend Silan neben Lösemittel(n) enthaltenden wässerigen Zusammensetzung teilweise schwierig anzuwenden. Nicht immer werden diese Beschichtungen mit hervorragenden Eigenschaften ausgebildet. Außerdem kann es hierbei Probleme geben, die sehr dünnen transparenten Silan-Beschichtungen auf dem metallischen Untergrund sowie deren Fehlstellen mit bloßem Auge oder mit optischen Hilfsmitteln ausreichend charakterisieren zu können. Der Korrosionsschutz und die Lackhaftung der gebildeten Siloxan- oder/und Polysiloxan-reichen Beschichtungen sind oft, aber nicht immer hoch und teilweise auch bei geeigneter Applikation für bestimmte Anwendungen nicht ausreichend hoch. Es bedarf weiterer Verfahren unter Einsatz von mindestens einem Silan, die eine hohe Verfahrenssicherheit und eine hohe Qualität der hiermit hergestellten Beschichtungen insbesondere bezüglich Korrosionsbeständigkeit und Lackhaftung aufweisen.

Bei der Gestaltung Silan-haltiger wässeriger Zusammensetzungen hat sich außerdem eine kleine bzw. große Zugabemenge an mindestens einer Komponente ausgewählt aus der Gruppe von organischen Monomeren, Oligomeren und Polymeren bewährt. Bei derartigen Zusammensetzungen ist die Art und Menge der Silan-Zugabe teilweise von entscheidender Bedeutung für den Erfolg. Üblicherweise sind jedoch die Zugabemengen an Silan hierzu vergleichsweise gering - meistens nur bis zu 5 Gew.-% aller Feststoffgehalte - und wirken dann als "coupling agent", wobei die haftvermittelnde Wirkung insbesondere zwischen metallischem Substrat und Lack und ggf. zwischen Pigment und organischen Lackbestandteilen vorherrschen sollte, aber untergeordnet teilweise auch eine geringe vernetzende Wirkung auftreten kann. Vorwiegend werden sehr geringe Silan-Zusätze zu thermisch härtbaren Harzsystemen zugegeben.

Die zwei weiteren Patentanmeldungen, die am gleichen Tag beim gleichen Patentamt zu einem ähnlichen Erfindungsgegenstand eingereicht sind, werden hiermit ausdrücklich einbezogen, insbesondere bezüglich der wässerigen Zusammensetzungen, der Zusätze zu den wässerigen Zusammensetzungen, der Schritte vor, beim und nach dem Beschichten, dem Badverhalten, der Schichtausbildung, der Schichteigenschaften und den ermittelten Wirkungen, vor allem bei den Ausführungsbeispielen und Vergleichsbeispielen. In gleicher Weise werden auch die die Priorität begründenden Anmeldungen in die Nachanmeldungen ausdrücklich einbezogen.

Bei der Verwendung von Silan-haltigen Lösungen zur Beschichtung metallischer Oberflächen ist bisher bekannt, dass die im wesentlichen oder vorwiegend Silan und deren Derivate enthaltenden Lösungen wasserempfindlich sind, wenn die Beschichtungen nicht stärker getrocknet wurden, so dass ein Spülen der frisch beschichteten, noch nicht durchgetrockneten Beschichtungen mit Wasser in der Regel zur Beeinträchtigung der Beschichtungen z.B. durch Ablösungen führt, da sie nicht ausreichend spülfest sind. Offensichtlich reichen die sehr dünnen Oxid/Hydroxid-Lagen der "natürlichen" Oxidhäute metallischer Oberflächen nicht aus, um frisch aufgetragenes Silan vor der Durchtrocknung ausreichend anhaftend zu halten. Erst wenn die Beschichtungen z.B. 5 Minuten bei 80 °C PMT (peakmetal-temperature), z.B. 25 Minuten bei 70 °C PMT oder stärker getrocknet sind, sind diese Beschichtungen in der Regel gegen Wasser unempfindlich, da die Kondensation der Silane/Silanole/Siloxane/Polysiloxane stärker fortgeschritten ist. Der Grad der Trocknung, der mit einer Kondensation der Silane/Silanole/Siloxane/Polysiloxane verbunden ist, und der zu einer Spülfestigkeit der Siloxan/Polysiloxan-haltigen Beschichtung variiert je nach dem Phasenbestand, der Beschichtung und der Art des Spülens.
Bestehende Phosphatieranlagen, insbesondere in der Automobilindustrie für die Reinigung und Vorbehandlung von Karosserien vor der Lackierung bedürfen keiner Trocknungsanlage. Aber auch ohne diese ist eine solche kanalartige Anlage oft weit über einhundert Meter lang. Vielfach grenzen diese Anlage am Ende, wo die fertig phosphatierten Karosserien aus dem Kanal kommen, direkt an eine Anlage zur Beschichtung mit einem kathodischen Tauchlack (KTL), so dass für den zusätzlichen Aufbau einer Trocknungsanlage in der Regel kein Platz zur Verfügung steht.

EP 1 433 878 A1 offenbart eine Zusammensetzung für eine Konversionsbeschichtung, die einen Gehalt an Zirkonium/Titan/Hafnium und an Fluor und wenigstens einen Zusatz zur Steigerung von Lackhaftung und Korrosionsschutz ausgewählt aus Kobalt-, Mangan- und Zink-Ionen, aus Erdalkalimetallionen, aus Ionen der dritten Nebengruppe, aus Kupfer-Ionen und aus einer Silanverbindung enthält.
EP 1 433 877 A1 lehrt ein Vorbehandlungsverfahren unter Beschichtung mit einer Konversionsschicht, bei der die Beschichtungszusammensetzung einen Gehalt an Zirkonium/Titan/Hafnium, Fluor und Aminogruppen aufweisenden Silan-Haftvermittlern bzw. deren Hydrolysate und Polymere enthält.
Es bestand daher die Aufgabe, wässerige Zusammensetzungen vorzuschlagen, deren Beschichtungen eine umweltfreundliche chemische Zusammensetzung aufweisen und eine hohe Korrosionsbeständigkeit gewährleisten, die auch in Multimetallanwendungen, in denen z.B. Stahl und Zink-reiche metallische Oberflächen und gegebenenfalls auch Aluminiumreiche metallische Oberflächen im gleichen Bad behandelt oder vorbehandelt werden, geeignet sind. Es bestand auch die Aufgabe, ein Verfahren zur Vorbehandlung insbesondere von Karosserien in der Automobilserienfertigung vorzuschlagen, das möglichst einfach und sicher mit Silan enthaltenden Lösungen einsetzbar ist. Ferner bestand die Aufgabe, ein Verfahren mit Silan-haltigen wässerigen Zusammensetzungen vorzuschlagen, das sich in bestehenden Anlagen der Automobilindustrie grundsätzlich umsetzen lässt und sich besonders zur Beschichtung von Karosserien im Automobilbau eignet. Hierbei soll eine Beschichtungsqualität auf Karosserieoberflächen erzielt werden, die den hochwertigen korrosionsschützenden Beschichtungen der ZinkManganNickel-Phosphatierungen von den Eigenschaften möglichst nahe kommt, um die Qualitätsstandards nicht zu gefährden.

Der Zusatz von mindestens einem Komplexfluorid hilft, Beeinträchtigungen der Anbindung von Silan an die metallische Oberfläche zu minimieren bzw. zu vermeiden, so dass das Spülen sich nicht oder nur geringfügig beeinträchtigend auswirken kann. Es wurde jetzt gefunden, dass eine Kombination von mindestens zwei Komplexfluoriden, insbesondere von Fluortitansäure und von Fluorzirkoniumsäure, eine außerordentliche Qualitätssteigerung der Beschichtung ermöglicht.
Es wurde jetzt gefunden, dass es nicht nur möglich ist, frisch applizierte und noch nicht durchgetrocknete und daher noch nicht stärker kondensierte Beschichtungen auf Basis von Silan zu spülen, sondern dass dieses Verfahrensabfolge sogar vorteilhaft ist, weil die derart hergestellten und gespülten Beschichtungen teilweise unabhängig von der chemischen Zusammensetzung des wässerigen Bades sogar einen besseren Korrosionsschutz und eine bessere Lackhaftung aufweisen. Dies widerspricht früheren Erfahrungen, nach denen ein Spülen einer frisch applizierten und noch nicht stärker getrockneten Beschichtung auf Basis von Silan leicht und oft zu einer Beeinträchtigung der Schichtqualität, wenn nicht sogar zum teilweisen oder vereinzelt zum vollständigen Entfernen der Beschichtung führt.

Es wurde jetzt auch gefunden, dass es möglich und vorteilhaft ist, auf frisch applizierte und noch nicht durchgetrocknete und daher noch nicht stärker kondensierte Beschichtungen auf Basis von Silan, die gegebenenfalls auch in diesem Zustand gespült wurden, einen Lack, eine lackähnliche Beschichtung, einen Primer oder einen Klebstoff zu applizieren. Die Applikation derartiger Zusammensetzungen auf Silan-basierte Nassfilme ist vorteilhaft, weil die derart hergestellten und gespülten Beschichtungen teilweise unabhängig von der chemischen Zusammensetzung des wässerigen Bades sogar einen besseren Korrosionsschutz und eine bessere Lackhaftung aufweisen.

Die Aufgabe wird gelöst mit einem Verfahren zur Beschichtung von metallischen Oberflächen mit einer Silan/Silanol/Siloxan/Polysiloxan enthaltenden Zusammensetzung, wobei die Zusammensetzung neben Wasser und gegebenenfalls neben mindestens einem organischen Lösemittel oder/und mindestens einer den pH-Wert beeinflussenden Substanz
mindestens eine Verbindung a) ausgewählt aus Silanen, Silanolen, Siloxanen und Polysiloxanen enthält, von denen mindestens eine dieser Verbindungen noch kondensieren kann,
mindestens zwei Komplexfluoride b) ausgewählt aus Komplexfluoriden von Titan, Hafnium und Zirkonium, und gegebenenfalls auch
mindestens eine Art Kationen c) ausgewählt aus Kationen von Metallen der 1. bis 3. und 5. bis 8. Nebengruppe einschließlich Lanthaniden sowie der 2. Hauptgruppe des Periodensystems der Elemente oder/und mindestens eine entsprechende Verbindung oder/und
mindestens eine organische Verbindung d) enthält ausgewählt aus Monomeren, Oligomeren, Polymeren, Copolymeren und Blockcopolymeren,
wobei die mit dieser Zusammensetzung frisch aufgebrachte Beschichtung mit einem wässerigen Tensid-haltigen Fluid gespült wird und bis zu diesem Spülen nicht durchgetrocknet wird, so dass die mindestens eine kondensationsfähige Verbindung a) bis zum Spülen nicht stark kondensiert.
Die nachfolgende Beschichtung kann hierbei eine zweite Konversionsschicht, eine Beschichtung infolge Applikation einer Nachspüllösung oder eine Beschichtung auf Basis eines Lacks, einer lackähnlichen Zusammensetzung, eines Primers oder eines Klebstoffs sein. Die zweite Konversionsschicht oder die Beschichtung infolge Applikation einer Nachspüllösung ist vorzugsweise eine wässerige Zusammensetzung auf Basis von mindestens einem Silan/Silanol/Siloxan/Polysiloxan, von mindestens einer Titan-, Hafnium- oder/und Zirkonium-haltigen Verbindung wie z.B. mindestens einem Komplexfluorid, von mindestens einer organischen Verbindung ausgewählt aus Monomeren, Oligomeren, Polymeren, Copolymeren und Blockcopolymeren oder/und von mindestens einer Phosphor- und Sauerstoff enthaltenden Verbindung. In vielen Ausführungsvarianten ist die Konzentration der wässerigen Zusammensetzung für die zweite Konversionsschicht bzw. der Nachspüllösung insgesamt geringer als eine vergleichbare wässerige Zusammensetzung für die erste Konversionsschicht, nämlich der erfindungsgemäßen Silan-Vorbehandlungsschicht.
Besonders vorteilhaft ist es, wenn die frisch aufgebrachte Beschichtung erst mit einem Fluid gespült wird, bevor eine nachfolgende Beschichtung appliziert wird. Hierbei kann der Nassfilm der erfindungsgemäßen Silan-Vorbehandlung ohne ein vorheriges stärkeres Trocknen des Nassfilms mit Wasser oder mit einer wässrigen Tensid enthaltenden Zusammensetzung gespült werden. Auf diesen Nassfilm kann anschließend im noch nicht stärker getrockneten Zustand eine nachfolgende Beschichtung aufgebracht werden, insbesondere durch Applikation eines Lacks, einer lackähnlichen Zusammensetzung, eines Primers oder eines Klebstoffs. Das Spülen des Nassfilms nach der Silan-Vorbehandlung erfolgt vorzugsweise unmittelbar nach dem Beschichten mit der Silan enthaltenden wässerigen Zusammensetzung, insbesondere innerhalb von ein oder zwei Minuten nach dem Beschichten mit der erfindungsgemäßen Silan-Vorbehandlung, besonders bevorzugt innerhalb von 30 Sekunden oder sogar innerhalb von 10 Sekunden nach diesem Beschichten. Vorzugsweise wird der Lack, die lackähnliche Zusammensetzung, der Primer oder der Klebstoff unmittelbar nach dem Spülen appliziert, insbesondere innerhalb von zwei oder drei Minuten nach dem Spülen der Silan enthaltenden Beschichtung, besonders bevorzugt innerhalb von 60 Sekunden oder sogar innerhalb von 20 Sekunden. Der Lack kann hierbei insbesondere ein Elektrotauchlack oder ein Wasser enthaltender Nasslack sein.

Es wird angenommen, dass das mindestens eine, noch kondensationsfähige Silan noch stärker chemisch reaktiv ist und insbesondere mit einer nachträglich aufgebrachten Primer-, Lack-, lackähnliche oder KlebstoffSchicht intensiver reagieren kann als ein bereits durchgetrocknetes und thermisch beeinflusst stark kondensiertes Silan.

Der Begriff "Silan" wird hierbei für Silane, Silanole, Siloxane, Polysiloxane und deren Reaktionsprodukte bzw. Derivate benutzt, die dabei auch oft "Silan"-Gemische sind. Der Begriff "Kondensieren" im Sinne dieser Anmeldung bezeichnet alle Formen der Vernetzung, der Weitervernetzung und der weiteren chemischen Reaktionen der Silane/Silanole/Siloxane/Polysiloxane. Der Begriff "Beschichtung" im Sinne dieser Anmeldung bezieht sich auf die mit der wässerigen Zusammensetzung ausgebildete Beschichtung einschließlich des Nassfilms, des angetrockneten Films, des durchgetrockneten Films, des bei erhöhter Temperatur getrockneten Films und des gegebenenfalls thermisch oder/und durch Bestrahlung weiter vernetzten Films.

Die wässerige Zusammensetzung ist eine wässerige Lösung, eine wässerige Dispersion oder/und eine Emulsion. Vorzugsweise ist der pH-Wert der wässerigen Zusammensetzung größer als 1,5 und kleiner als 9, besonders bevorzugt im Bereich von 2 bis 7, ganz besonders bevorzugt im Bereich von 2,5 bis 6,5, insbesondere im Bereich von 3 bis 6. Bei einem pH-Wert von z.B. 2,5 kann eine deutlich verringerte Abscheidung von Titan- bzw. ZirkonVerbindungen aus dem Komplexfluorid auftreten, die sich durch leichte Herabsetzung der Schichteigenschaften auswirkt. Bei einem pH-Wert von etwa 7 kann das Komplexfluorid enthaltene Bad instabil werden, und es können Ausfällungen auftreten.

Besonders bevorzugt wird der wässerigen Zusammensetzung mindestens ein Silan oder/und mindestens eine entsprechende Verbindung mit mindestens einer Aminogruppe, mit mindestens einer Harnstoffgruppe oder/und mit mindestens einer Iminogruppe zugesetzt, da die hiermit hergestellten Beschichtungen oft eine höhere Lackhaftung oder/und eine höhere Affinität zur nachfolgenden Lackschicht zeigen. Insbesondere bei Verwendung von mindestens einem Silan oder/und mindestens einer entsprechenden Verbindung mit mindestens einer derartigen Gruppe ist darauf zu achten, dass die Kondensation bei pH-Werten unter 2 gegebenenfalls sehr schnell verläuft. Vorzugsweise kann der Anteil an Aminosilanen, Ureidosilanen oder/und Silanen mit mindestens einer Iminogruppe oder/und an entsprechenden Silanolen, Siloxanen und Polysiloxanen an der Summe an allen Arten an Verbindungen ausgewählt aus Silanen, Silanolen, Siloxanen und Polysiloxanen erhöht sein, besonders bevorzugt über 20, über 30 oder über 40 Gew.-% liegen berechnet als die entsprechenden Silanole, ganz besonders bevorzugt über 50, über 60, über 70 oder über 80 Gew.-% liegen und gegebenenfalls sogar bis zu 90, bis zu 95 oder bis zu 100 Gew.-% betragen.

Vorzugsweise weist die wässerige Zusammensetzung einen Gehalt an Silan/Silanol/Siloxan/Polysiloxan a) im Bereich von 0,005 bis 80 g/L auf, berechnet auf Basis der entsprechenden Silanole. Besonders bevorzugt liegt dieser Gehalt im Bereich von 0,01 bis 30 g/L, ganz besonders bevorzugt im Bereich von 0,02 bis 12 g/L, bis 8 g/L oder bis 5 g/L, insbesondere im Bereich von 0,05 bis 3 g/L oder im Bereich von 0,08 bis 2 g/L oder bis 1 g/L. Diese Gehaltsbereiche beziehen sich insbesondere auf Badzusammensetzungen.

Wenn jedoch ein Konzentrat eingesetzt wird, um eine entsprechende Badzusammensetzung herzustellen, insbesondere durch Verdünnen mit Wasser und gegebenenfalls durch Zusatz von mindestens einer weiteren Substanz, empfiehlt es sich, beispielsweise ein Konzentrat A mit einem Gehalt an Silan/Silanol/Siloxan/Polysiloxan a) getrennt von einem Konzentrat B mit einem Gehalt an allen oder fast allen übrigen Bestandteilen zu halten und diese Komponenten erst im Bad zusammenzuführen. Hierbei kann gegebenenfalls auch jeweils mindestens ein Silan, Silanol, Siloxan oder/und Polysiloxan auch teilweise oder gänzlich im festen Zustand vorliegen, im festen Zustand zugegeben werden oder/und als Dispersion oder Lösung zugesetzt werden. Die Konzentrationsbereiche des Bades können jedoch je nach Applikation unterschiedliche Gehaltsschwerpunkte aufweisen.

Besonders bevorzugt enthält die Zusammensetzung einen Gehalt an jeweils mindestens einem Silan, Silanol, Siloxan oder/und Polysiloxan a) mit jeweils mindestens einer Gruppe ausgewählt aus Acrylatgruppen, Alkylaminoalkylgruppen, Alkylaminogruppen, Aminogruppen, Aminoalkylgruppen, Bernsteinsäureanhydridgruppen, Carboxylgruppen, Epoxygruppen, Glycidoxygruppen, Hydroxygruppen, Iminogruppen, Isocyanatogruppen, Methacrylatgruppen oder/und Ureidogruppen (Harnstoffgruppen).

Die Silane, Silanole, Siloxane oder/und Polysiloxane in der wässerigen Zusammensetzung oder zumindest ihre der wässerigen Zusammensetzung zugesetzten Verbindungen sind oder zumindest ein Teil von ihnen ist vorzugsweise wasserlöslich. Die Silane im Sinne dieser Anmeldung werden als wasserlöslich angesehen, wenn sie summarisch bei Raumtemperatur in der Silan/Silanol/Siloxan/Polysiloxan enthaltenden Zusammensetzung eine Löslichkeit in Wasser von mindestens 0,05 g/L, vorzugsweise von mindestens 0,1 g/L, besonders bevorzugt von mindestens 0,2 g/L oder von mindestens 0,3 g/L aufweisen. Das bedingt nicht, dass jedes einzelne dieser Silane diese Mindestlöslichkeit aufweisen muss, sondern dass diese Mindestwerte durchschnittlich erzielt werden.

Vorzugsweise ist in der wässerigen Zusammensetzung mindestens ein Silan/Silanol/Siloxan/Polysiloxan enthalten ausgewählt aus Fluor-freien Silanen und den entsprechenden Silanolen/Siloxanen/Polysiloxanen aus jeweils mindestens einem Acyloxysilan, einem Alkoxysilan, einem Silan mit mindestens einer Aminogruppe wie einem Aminoalkylsilan, einem Silan mit mindestens einer Bernsteinsäuregruppe oder/und Bernsteinsäureanhydridgruppe, einem Bis-Silyl-Silan, einem Silan mit mindestens einer Epoxygruppe wie einem Glycidoxysilan, einem (Meth)acrylato-Silan, einem Multi-Silyl-Silan, einem Ureidosilan, einem Vinylsilan oder/und mindestens einem Silanol oder/und mindestens einem Siloxan bzw. Polysiloxan von chemisch entsprechender Zusammensetzung wie die zuvor genannten Silane. Sie enthält mindestens ein Silan oder/und (jeweils) mindestens ein monomeres, dimeres, oligomeres oder/und polymeres Silanol oder/und (jeweils) mindestens ein monomeres, dimeres, oligomeres oder/und polymeres Siloxan, wobei im folgenden hierbei Oligomere auch schon Dimere und Trimere umfassen sollen. Besonders bevorzugt hat das mindestens eine Silan bzw. das entsprechende Silanol/Siloxan/Polysiloxan jeweils mindestens eine Amino-Gruppe, Imino-Gruppe oder/und Ureido-Gruppe.

Insbesondere ist hierin mindestens ein Silan oder/und mindestens ein entsprechendes Silanol/Siloxan/Polysiloxan enthalten ausgewählt aus der Gruppe von oder auf Basis von
(3,4-Epoxyalkyl)trialkoxysilan,
(3,4-Epoxycycloalkyl)alkyltrialkoxysilan,
3-Acryloxyalkyltrialkoxysilan,
3-Glycidoxyalkyltrialkoxysilan,
3-Methacryloxyalkyltrialkoxysilan,
3-(Trialkoxysilyl)alkylbernsteinsäuresilan,
4-Amino-dialkylalkyltrialkoxysilan,
4-Amino-dialkylalkylalkyldialkoxysilan,
Aminoalkylaminoalkyltrialkoxysilan,
Aminoalkylaminoalkylalkyldialkoxysilan,
Aminoalkyltrialkoxysilan,
Bis-(trialkoxysilylalkyl)amin,
Bis-(trialkoxysilyl)ethan,
Gamma-Acryloxyalkyltrialkoxysilan,
Gamma-Aminoalkyltrialkoxysilan,
Gamma-Methacryloxyalkyltrialkoxysilan,
(Gamma-Trialkoxysilylalkyl)dialkylentriamin,
Gamma-Ureidoal kyltrialkoxysilan,
N-(3-trialkoxysilylalkyl)alkylendiamin,
N-Alkylaminoisoalkyltrialkoxysilan,
N-(Aminoalkyl)aminoalkylalkyldialkoxysilan,
N-beta-(aminoalkyl)-gamma-aminoalkyltrialkoxysilan,
N-(gamma-trialkoxysilylalkyl)dialkylentriamin,
N-Phenyl-aminoalkyltrialkoxysilan,
Poly(aminoalkyl)alkyldialkoxysilan,
Tris(3-trialkoxysilyl)alkylisocyanurat,
Ureidoalkyltrialkoxysilan und
Vinylacetoxysilan.

Besonders bevorzugt ist hierin mindestens ein Silan oder/und mindestens ein entsprechendes Silanol/Siloxan/Polysiloxan enthalten ausgewählt aus der Gruppe von oder auf Basis von
(3,4-Epoxybutyl)triethoxysilan,
(3,4-Epoxybutyl)trimethoxysilan,
(3,4-Epoxycyclohexyl)propyltriethoxysilan,
(3,4-Epoxycyclohexyl)propyltrimethoxysilan,
3-Acryloxypropyltriethoxysilan,
3-Acryloxypropyltrimethoxysilan,
3-Aminopropylsilanetriol,
3-Glycidoxypropyltriethoxysilan,
3-Glycidoxypropyltrimethoxysilan,
3-Methacryloxypropyltriethoxysilan,
3-Methacryloxypropyltrimethoxysilan,
3-(Triethoxysilyl)propylbernsteinsäuresilan,
Aminoethylaminopropylmethyldiethoxysilan,
Aminoethylaminopropylmethyldimethoxysilan,
Aminopropyltrialkoxysilan,
Beta-(3,4-Epoxycyclohexyl)ethyltriethoxysilan,
Beta-(3,4-Epoxycyclohexyl)ethyltrimethoxysilan,
Beta-(3,4-Epoxycyclohexyl)methyltriethoxysilan,
Beta-(3,4-Epoxycyclohexyl)methyltrimethoxysilan,
Bis-1,2-(triethoxysilyl)ethan,
Bis-1,2-(trimethoxysilyl)ethan,
Bis(triethoxysilylpropyl)amin,
Bis(trimethoxysilylpropyl)amin,
Gamma-(3,4-Epoxycyclohexyl)propyltriethoxysilan,
Gamma-(3,4-Epoxycyclohexyl)propyltrimethoxysilan,
Gamma-Acryloxypropyltriethoxysilan,
Gamma-Acryloxypropyltrimethoxysilan,
Gamma-Aminopropyltriethoxysilan,
Gamma-Aminopropyltrimethoxysilan,
Gamma-Methacryloxypropyltriethoxysilan,
Gamma-Methacryloxypropyltrimethoxysilan,
Gamma-Ureidopropyltrialkoxysilan,
N-(3-(trimethoxysilyl)propyl)ethylendiamin,
N-beta-(aminoethyl)-gamma-aminopropyltriethoxysilan,
N-beta-(aminoethyl)-gamma-aminopropyltrimethoxysilan,
N-(gamma-triethoxysilylpropyl)diethylentriamin,
N-(gamma-trimethoxysilylpropyl)diethylentriamin,
N-(gamma-triethoxysilylpropyl)dimethylentriamin,
N-(gamma-trimethoxysilylpropyl)dimethylentriamin,
Poly(aminoalkyl)ethyldialkoxysilan,
Poly(aminoalkyl)methyldialkoxysilan,
Tris(3-(triethoxysilyl)propyl)isocyanurat,
Tris(3-(trimethoxysilyl)propyl)isocyanurat,
Ureidopropyltrialkoxysilan und
Vinyltriacetoxysilan.

Gegebenenfalls ist in einzelnen Ausführungsvarianten in der wässerigen Zusammensetzung mindestens ein Silan/Silanol/Siloxan/Polysiloxan enthalten mit einer Fluor-haltigen Gruppe. Je nach Auswahl der SilanVerbindung(en) kann auch die Hydrophilie/Hydrophobie zielstrebig eingestellt werden.

Vorzugsweise wird in manchen Ausführungsformen der wässerigen Zusammensetzung mindestens ein zumindest teilweise hydrolysiertes, ein zumindest teilweise kondensiertes Silan/Silanol/Siloxan/Polysiloxan zugesetzt. Insbesondere beim Zusammenmischen der wässerigen Zusammensetzung kann gegebenenfalls jeweils mindestens ein bereits vorhydrolysiertes, vorkondensiertes Silan/Silanol/Siloxan/Polysiloxan zugesetzt werden. Ein derartiger Zusatz ist besonders bevorzugt.

In manchen Ausführungsformen kann der wässerigen Zusammensetzung mindestens ein zumindest weitgehend oder/und vollständig hydrolysiertes oder/und ein zumindest weitgehend oder/und vollständig kondensiertes Silan/Silanol/Siloxan/Polysiloxan zugesetzt werden. Ein nicht hydrolysiertes Silan bindet in vielen Ausführungsvarianten schlechter an die metallische Oberfläche an als ein zumindest teilweise hydrolysiertes Silan/Silanol. Ein weitgehend hydrolysiertes und nicht oder nur wenig kondensiertes Silan/Silanol/Siloxan bindet in vielen Ausführungsvarianten deutlich besser an die metallische Oberfläche an als ein zumindest teilweise hydrolysiertes und weitgehend kondensiertes Silan/Silanol/Siloxan/Polysiloxan. Ein vollständig hydrolysiertes und weitgehend kondensiertes Silanol/Siloxan/Polysiloxan zeigt in vielen Ausführungsvarianten nur noch eine geringe Neigung an die metallische Oberfläche chemisch angebunden zu werden.

In manchen Ausführungsformen kann der wässerigen Zusammensetzung zusätzlich oder/und alternativ zu Silan(en)/Silanol(en) mindestens ein Siloxan oder/und Polysiloxan zugesetzt werden, das keinen oder nur einen geringen Gehalt - z.B. weniger als 20 oder weniger als 40 Gew.-% der Summe an Silan/Silanol/Siloxan/Polysiloxan - an Silanen/Silanolen aufweist. Das Siloxan bzw. Polysiloxan ist vorzugsweise kurzkettig und wird vorzugsweise durch Rollcoater-Behandlung aufgetragen. Dann wirkt sich das auf die Beschichtung gegebenenfalls durch stärkere Hydrophobie und höheren Blankkorrosionsschutz aus.

Die wässerige Zusammensetzung weist mindestens zwei oder sogar mindestens drei Verbindungen von Titan, Hafnium und Zirkonium auf. Hierbei können sich diese Verbindungen in ihren Kationen oder/und in ihren Anionen unterscheiden. Die wässerige Zusammensetzung, insbesondere die Badzusammensetzung, weist einen Gehalt an mindestens zwei Komplexfluoriden b) ausgewählt aus Komplexfluoriden von Titan, Hafnium und Zirkonium auf. Vorzugsweise liegt ihr Unterschied nicht nur in der Art des Komplexes.

Der Gehalt an Komplexfluoriden liegt insbesondere im Bereich von 0,01 bis 100 g/L berechnet als Summe der entsprechenden Metallkomplexfluoride als MeF₆. Bevorzugt liegt der Gehalt im Bereich von 0,03 bis 70 g/L, besonders bevorzugt im Bereich von 0,06 bis 40 g/L, ganz besonders bevorzugt im Bereich von 1 bis 10 g/L. Die Komplexfluoride können insbesondere als MeF₄ oder/und als MeF₆, jedoch auch in anderen Stufen bzw. Zwischenstufen vorliegen. Vorteilhafterweise liegt in vielen Ausführungsvarianten gleichzeitig mindestens ein Titan- und mindestens ein Zirkoniumkomplexfluorid vor. Hierbei kann es in vielen Fällen vorteilhaft sein, gleichzeitig mindestens einen MeF₄- und mindestens einen MeF₆-Komplex in der Zusammensetzung vorliegen zu haben, insbesondere gleichzeitig einen TiF₆- und einen ZrF₄-Komplex. Hierbei kann es vorteilhaft sein, diese Komplexfluorid-Verhältnisse bereits im Konzentrat einzustellen und auf diesem Wege in das Bad zu übernehmen.

Erstaunlicherweise beeinflussen sich die einzelnen Komplexfluoride bei ihrer Kombination nicht negativ, sondern zeigen einen unerwarteten positiven Verstärkungseffekt. Diese Zusätze auf Basis von Komplexfluorid wirken offenbar in ähnlicher oder gleicher Weise. Wenn eine Kombination von Komplexfluoriden auf Basis von Titan und Zirkonium und nicht nur ein Komplexfluorid nur auf Basis von Titan oder nur eines auf Basis von Zirkonium eingesetzt wurde, ergaben sich überraschenderweise immer merklich bessere Ergebnisse als bei einem einzelnen dieser Zusätze. Auf der Oberfläche scheidet sich ein Komplexfluorid auf Basis von Titan bzw. von Zirkonium vermutlich als Oxid oder/und Hydroxid ab.

Es wurde jetzt überraschend festgestellt, dass eine sehr gute Multimetall-Behandlung mit einer einzigen wässerigen Zusammensetzung erst möglich ist, wenn mindestens zwei verschiedene Komplexfluoride verwendet werden wie z.B. solche auf Basis von Titan und von Zirkonium. Die einzeln eingesetzten Komplexfluoride zeigten bei den verschiedensten Versuchen nie Ergebnisse, die gleich gut waren wie für die Kombination dieser beiden Komplexfluoride, unabhängig davon, welche Zusätze darüber hinaus dazugegeben wurden.

Zusätzlich zu mindestens zwei Komplexfluoriden kann auch eine andersartige Verbindung von Titan, Hafnium oder/und Zirkonium zugesetzt werden, beispielsweise mindestens ein Hydroxycarbonat oder/und mindestens eine andere wasserlösliche oder schwach wasserlösliche Verbindung wie z.B. mindestens ein Nitrat oder/und mindestens ein Carboxylat.

Vorzugsweise werden als Kationen oder/und entsprechende Verbindungen c) nur Arten von Kationen bzw. entsprechende Verbindungen ausgewählt aus der Gruppe von Magnesium, Kalzium, Yttrium, Lanthan, Cer, Vanadium, Niob, Tantal, Molybdän, Wolfram, Mangan, Eisen, Kobalt, Nickel, Kupfer, Silber und Zink, besonders bevorzugt aus der Gruppe von Magnesium, Kalzium, Yttrium, Lanthan, Cer, Vanadium, Molybdän, Wolfram, Mangan, Eisen, Kobalt, Kupfer und Zink, wenn von Spurengehalten abgesehen wird.

Andererseits hat sich überraschenderweise gezeigt, dass Kationen von Eisen und Zink und daher auch die Anwesenheit entsprechender Verbindungen im Bad, die gerade bei sauren Zusammensetzungen zum Herauslösen von derartigen Ionen aus der metallischen Oberfläche vermehrt beitragen können, sich in weiten Gehaltsbereichen nicht negativ auf das Badverhalten, die Schichtausbildung und die Schichteigenschaften auswirken.

Vorzugsweise weist die wässerige Zusammensetzung, insbesondere die Badzusammensetzung, einen Gehalt an Kationen oder/und entsprechenden Verbindungen c) im Bereich von 0,01 bis 20 g/L auf berechnet als Summe der Metalle. Besonders bevorzugt liegt er im Bereich von 0,03 bis 15 g/L, ganz besonders bevorzugt im Bereich von 0,06 bis 10 g/L, insbesondere im Bereich von 0,1 bis 6 g/L.

Vorzugsweise enthält die Zusammensetzung mindestens eine Art Kationen ausgewählt aus Kationen von Cer, Chrom, Eisen, Kalzium, Kobalt, Kupfer, Magnesium, Mangan, Molybdän, Nickel, Niob, Tantal, Yttrium, Zink, Zinn und weiteren Lanthaniden oder/und an mindestens einer entsprechenden Verbindung. Vorzugsweise sind nicht alle Kationen, die in der wässerigen Zusammensetzung enthalten sind, nicht nur durch die wässerige Zusammensetzung aus der metallischen Oberfläche herausgelöst, sondern auch zumindest teilweise oder sogar weitgehend der wässerigen Zusammensetzung zugesetzt worden. Daher kann ein frisch angesetztes Bad von bestimmten Kationen bzw. Verbindungen frei sein, die erst aus Reaktionen mit metallischen Werkstoffen bzw. aus Reaktionen im Bad freigesetzt werden bzw. entstehen.

Der Zusatz von Manganionen bzw. an mindestens einer Manganverbindung hat sich überraschend als besonders vorteilhaft herausgestellt. Obwohl offenbar keine oder fast keine Manganverbindung auf der metallischen Oberfläche abgeschieden wird, fördert dieser Zusatz offenbar die Abscheidung von Silan/Silanol/Siloxan/Polysiloxan und verbessert so die Eigenschaften der Beschichtung signifikant. Auch ein Zusatz an Magnesiumionen bzw. an mindestens einer Magnesiumverbindung hat sich unerwartet als vorteilhaft herausgestellt, da dieser Zusatz die Abscheidung von Titan- oder/und Zirkoniumverbindungen, vermutlich als Oxid oder/und Hydroxid, auf der metallischen Oberfläche fördert und somit die Eigenschaften der Beschichtung deutlich verbessert. Ein kombinierter Zusatz von Magnesium und Mangan führt teilweise zu noch weiter verbesserten Beschichtungen. Dagegen hat sich ein Zusatz von nur 0,02 g/L an Kupferionen noch nicht als von signifikantem Einfluss herausgestellt. Bei einem höheren Gehalt an Kalziumionen ist darauf zu achten, dass keine Destabilisierung eines Komplexfluorids durch Bildung von Calciumfluorid auftritt.

Vorzugsweise enthält die Zusammensetzung einen Gehalt an mindestens einer Art Kationen oder/und entsprechende Verbindungen ausgewählt aus Erdalkalimetallionen im Bereich von 0,01 bis 50 g/L berechnet als entsprechende Verbindungen, besonders bevorzugt im Bereich von 0,03 bis 35 g/L, ganz besonders bevorzugt im Bereich von 0,06 bis 20 g/L, insbesondere im Bereich von 0,1 bis 8 g/L. Die Erdalkalimetallionen bzw. entsprechende Verbindungen können helfen, die Abscheidung von Verbindungen auf Basis von Titan oder/und Zirkonium zu verstärken, was oft insbesondere für die Erhöhung der Korrosionsbeständigkeit von Vorteil ist.

Vorzugsweise enthält die Zusammensetzung einen Gehalt an mindestens einer Art Kationen ausgewählt aus Kationen von Eisen, Kobalt, Magnesium, Mangan, Nickel, Yttrium, Zink und Lanthaniden oder/und an mindestens einer entsprechenden Verbindung c), insbesondere im Bereich von 0,01 bis 20 g/L berechnet als Summe der Metalle. Besonders bevorzugt liegt er im Bereich von 0,03 bis 15 g/L, ganz besonders bevorzugt im Bereich von 0,06 bis 10 g/L, insbesondere im Bereich von 0,1 bis 6 g/L.

Vorzugsweise enthält die Zusammensetzung einen Gehalt an mindestens einer organischen Verbindung d) ausgewählt aus Monomeren, Oligomeren, Polymeren, Copolymeren und Blockcopolymeren, insbesondere mindestens eine Verbindung auf Basis von Acryl, Epoxid oder/und Urethan. Hierbei kann zusätzlich oder alternativ auch mindestens eine organische Verbindung mit mindestens einer Silyl-Gruppe eingesetzt werden. In manchen Ausführungsformen ist es bevorzugt, solche organischen Verbindungen mit einem Gehalt oder mit einem höheren Gehalt an OH-Gruppen, an AminGruppen, an Carboxylat-Gruppen, an Isocyanat-Gruppen oder/und an Isocyanurat-Gruppen einzusetzen.

Vorzugsweise enthält die Zusammensetzung einen Gehalt an mindestens einer organischen Verbindung d) ausgewählt aus Monomeren, Oligomeren, Polymeren, Copolymeren und Blockcopolymeren im Bereich von 0,01 bis 200 g/L berechnet als Feststoffzusatz. Besonders bevorzugt liegt der Gehalt im Bereich von 0,03 bis 120 g/L, ganz besonders bevorzugt im Bereich von 0,06 bis 60 g/L, insbesondere im Bereich von 0,1 bis 20 g/L. Solche organischen Verbindungen können in manchen Ausführungsvarianten helfen, die Ausbildung der Beschichtung zu vergleichmäßigen. Diese Verbindungen können bei der Ausbildung einer kompakteren, dichteren, chemisch resistenteren oder/und wasserresistenteren Beschichtung im Vergleich zu Beschichtungen auf Basis Silan/Silanol/Siloxan/Polysiloxan usw. ohne diese Verbindungen beitragen. Je nach Auswahl der organischen Verbindung(en) kann auch die Hydrophilie/Hydrophobie zielstrebig eingestellt werden. Eine stark hydrophobe Beschichtung ist jedoch in einigen Anwendungen problematisch wegen der erforderlichen Anbindung von insbesondere wasserbasierten Lacken. Insbesondere bei Pulverlacken kann jedoch eine stärkere Hydrophobie eingestellt werden. Bei Verwendung eines Zusatzes von mindestens einer organischen Verbindung kann sich eine Kombination mit Verbindungen mit einer gewissen Funktionalität besonders vorteilhaft erweisen wie z.B. Verbindungen auf Basis von Aminen/Diaminen/Polyaminen/Harnstoff/Iminen/Diiminen/Polyiminen bzw. deren Derivaten, Verbindungen auf Basis von insbesondere verkappten Isocyanaten/Isocyanuraten/Melamin-Verbindungen, Verbindungen mit Carboxyl- oder/und Hydroxyl-Gruppen wie z.B. Carboxylate, längerkettige Zucker-artige Verbindungen wie z.B. (synthetische) Stärke, Cellulose, Saccharide, langkettige Alkohole oder/und deren Derivate. Unter den langkettigen Alkoholen werden insbesondere solche mit 4 bis 20 C-Atomen zugesetzt wie ein Butandiol, ein Butylglykol, ein Butyldiglykol, ein Ethylenglykolether wie Ethylenglykolmonobutylether, Ethylenglykolmonoethylether, Ethylenglykolmonomethylether, Ethylglykolpropylether, Ethylenglykolhexylether, Diethylenglykolmethylether, Diethylenglykolethylether, Diethylenglykolbutylether, Diethylenglykolhexylether oder ein Propylenglykolether wie Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, Propylenglykolmonopropylether, Dipropylenglykolmonopropylether, Tripropylenglykolmonopropylether, Propylenglykolphenylether, Trimethylpentandioldiisobutyrat, ein Polytetrahydrofuran, ein Polyetherpolyol oder/und ein Polyesterpolyol.

Das gewichtsbezogene Verhältnis von Verbindungen auf Basis von Silan/Silanol/Siloxan/Polysiloxan berechnet auf Basis der entsprechenden Silanole zu Verbindungen auf Basis von organischen Polymeren berechnet als Feststoffzusatz in der Zusammensetzung liegt vorzugsweise im Bereich von 1 : 0,05 bis 1 : 30 , besonders bevorzugt im Bereich von 1 : 0,1 bis 1 : 2, ganz besonders bevorzugt im Bereich von 1 : 0,2 bis 1 : 20. In vielen Ausführungsvarianten liegt dieses Verhältnis im Bereich von 1 : 0,25 bis 1 : 12, im Bereich von 1 : 0,3 bis 1 : 8 oder im Bereich von 1 : 0,35 bis 1 : 5.

Es wurde jetzt überraschend festgestellt, dass ein Zusatz insbesondere an organischem Polymer oder/und Copolymer die Korrosionsbeständigkeit insbesondere auf Eisen und Stahl deutlich verbessert und dabei für eine höhere Prozeßsicherheit und konstant gute Beschichtungseigenschaften von besonderem Vorteil ist.

Gegebenenfalls enthält die Zusammensetzung einen Gehalt an Siliciumfreien Verbindungen mit mindestens einer Amino-, Harnstoff- oder/und Imino-Gruppe, insbesondere Verbindungen von Amin/Diamin/Polyamin/Harnstoff/Imin/Diimin/Polyimin und deren Derivaten, vorzugsweise im Bereich von 0,01 bis 30 g/L berechnet als Summe der entsprechenden Verbindungen. Besonders bevorzugt liegt der Gehalt im Bereich von 0,03 bis 22 g/L, ganz besonders bevorzugt im Bereich von 0,06 bis 15 g/L, insbesondere im Bereich von 0,1 bis 10 g/L. Vorzugsweise wird mindestens eine Verbindung wie z.B. Aminoguanidin, Monoethanolamin, Triethanolamin oder/und ein verzweigtes Harnstoffderivat mit einem Alkylrest zugesetzt. Ein Zusatz beispielsweise an Aminoguanidin verbessert die Eigenschaften der erfindungsgemäßen Beschichtungen deutlich.

Gegebenenfalls enthält die Zusammensetzung einen Gehalt an Anionen von Nitrit und Verbindungen mit einer Nitro-Gruppe, vorzugsweise im Bereich von 0,01 bis 10 g/L berechnet als Summe der entsprechenden Verbindungen. Besonders bevorzugt liegt der Gehalt im Bereich von 0,02 bis 7,5 g/L, ganz besonders bevorzugt im Bereich von 0,03 bis 5 g/L, insbesondere im Bereich von 0,05 bis 1 g/L. Vorzugsweise wird diese Substanz zugesetzt als salpetrige Säure HNO₂, als ein Alkalinitrit, als Ammoniumnitrit, als Nitroguanidin oder/und als Paranitrotoluolsulfonsäure, insbesondere als Natriumnitrit oder/und Nitroguanidin.

Es wurde jetzt überraschend festgestellt, dass ein Zusatz insbesondere an Nitroguanidin zu der wässerigen Zusammensetzung das Aussehen der erfindungsgemäßen Beschichtungen sehr gleichmäßig gestaltet und die Beschichtungsqualität spürbar steigert. Dies wirkt sich insbesondere an "sensiblen" metallischen Oberflächen wie auf sandgestrahlten Eisen- bzw. Stahloberflächen sehr positiv aus. Ein Zusatz an Nitroguanidin verbessert die Eigenschaften der erfindungsgemäßen Beschichtungen merklich.

Es wurde jetzt überraschend festgestellt, dass ein Zusatz an Nitrit die Anrostneigung vor allem von Eisen- und Stahloberflächen deutlich verringern kann.

Gegebenenfalls enthält die Zusammensetzung einen Gehalt an Verbindungen auf Basis von Peroxid wie z.B. Wasserstoffperoxid oder/und mindestens ein organisches Peroxid, vorzugsweise im Bereich von 0,005 bis 5 g/L berechnet als H₂O₂. Besonders bevorzugt liegt der Gehalt im Bereich von 0,006 bis 3 g/L, ganz besonders bevorzugt im Bereich von 0,008 bis 2 g/L, insbesondere im Bereich von 0,01 bis 1 g/L. Bei Anwesenheit von Titan ergibt sich im Bad oft ein Titan-Peroxo-Komplex, der die Lösung bzw. Dispersion orange einfärbt. Diese Färbung ist jedoch typischerweise nicht in der Beschichtung, da dieser Komplex offensichtlich nicht als solcher in die Beschichtung eingebaut wird. Daher kann über die Farbe des Bades der Titangehalt bzw. Peroxidgehalt abgeschätzt werden. Vorzugsweise wird die Substanz zugesetzt als Wasserstoffperoxid.

Es wurde jetzt unerwartet festgestellt, dass ein Zusatz an Wasserstoffperoxid zu der erfindungsgemäßen wässerigen Zusammensetzung die optische Qualität der beschichteten Substrate verbessert.

Gegebenenfalls enthält die Zusammensetzung einen Gehalt an Phosphor-haltigen Verbindungen, vorzugsweise im Bereich von 0,01 bis 20 g/L berechnet als Summe der Phosphor enthaltenden Verbindungen. Vorzugsweise enthalten diese Verbindungen Phosphor und Sauerstoff, insbesonders als Oxyanionen und als entsprechende Verbindungen. Besonders bevorzugt liegt der Gehalt im Bereich von 0,05 bis 18 g/L, ganz besonders bevorzugt im Bereich von 0,1 bis 15 g/L, insbesondere im Bereich von 0,2 bis 12 g/L. Vorzugsweise wird jeweils als Substanz d₄) mindestens jeweils ein Orthophosphat, ein oligomeres oder/und polymeres Phosphat oder/und ein Phosphonat zugesetzt. Das mindestens eine Orthophosphat oder/und deren Salze oder/und deren Ester kann/können beispielsweise jeweils mindestens ein Alkaliphosphat, Eisen-, Mangan- oder/und Zinkhaltiges Orthophosphat oder/und mindestens eines ihrer Salze oder/und Ester sein. Stattdessen oder zusätzlich kann auch jeweils mindestens ein Metaphosphat, Polyphosphat, Pyrophosphat, Triphosphat oder/und deren Salze oder/und deren Ester zugesetzt werden. Als Phosphonat kann beispielsweise jeweils mindestens eine Phosphonsäure wie z.B. mindestens eine Alkyldiphosphonsäure oder/und deren Salze oder/und deren Ester zugesetzt werden. Die Phosphor-haltigen Verbindungen dieser Stoffgruppe sind keine Tenside.

Es wurde jetzt überraschend festgestellt, dass ein Zusatz an Orthophosphat zu der erfindungsgemäßen wässerigen Zusammensetzung die Qualität der Beschichtungen insbesondere auf elektrolytisch verzinkten Substraten deutlich verbessert.

Es wurde außerdem jetzt überraschend festgestellt, dass ein Zusatz an Phosphonat zu der erfindungsgemäßen wässerigen Zusammensetzung die Korrosionsbeständigkeit von Aluminium-reichen Oberflächen merklich verbessert, insbesondere bei Werten im CASS-Test.

Gegebenenfalls enthält die wässerige Zusammensetzung einen Gehalt an mindestens einer Art Anionen ausgewählt aus Carboxylaten wie z.B. Acetat, Butyrat, Citrat, Formiat, Fumarat, Glykolat, Hydroxyacetat, Lactat, Laurat, Maleat, Malonat, Oxalat, Propionat, Stearat, Tartrat oder/und an mindestens einer entsprechenden, nicht oder/und nur teilweise dissoziierten Verbindung.

Gegebenenfalls enthält die Zusammensetzung einen Gehalt an Carboxylat-Anionen oder/und Carboxylat-Verbindungen im Bereich von 0,01 bis 30 g/L berechnet als Summe der entsprechenden Verbindungen. Besonders bevorzugt liegt der Gehalt im Bereich von 0,05 bis 15 g/L, ganz besonders bevorzugt im Bereich von 0,1 bis 8 g/L, insbesondere im Bereich von 0,3 bis 3 g/L. Als Carboxylat kann besonders bevorzugt jeweils mindestens ein Citrat, Lactat, Oxalat oder/und Tartrat zugesetzt werden. Der Zusatz an mindestens einem Carboxylat kann helfen, ein Kation zu komplexieren und leichter in Lösung zu halten, wodurch eine höhere Badstabilität und Steuerbarkeit des Bades erreicht werden kann. Überraschenderweise wurde gefunden, dass durch einen Carboxylatgehalt die Bindung eines Silans an die metallische Oberfläche teilweise erleichtert und verbessert werden kann.

Vorzugsweise enthält die Zusammensetzung auch einen Gehalt an Nitrat. Vorzugsweise enthält sie einen Gehalt an Nitrat im Bereich von 0,01 bis 20 g/L berechnet als Summe der entsprechenden Verbindungen. Besonders bevorzugt liegt der Gehalt im Bereich von 0,03 bis 12 g/L, ganz besonders bevorzugt im Bereich von 0,06 bis 8 g/L, insbesondere im Bereich von 0,1 bis 5 g/L. Nitrat kann helfen, die Ausbildung der Beschichtung insbesondere auf Stahl zu vergleichmäßigen. Nitrit kann sich gegebenenfalls, meist nur teilweise, in Nitrat umwandeln. Nitrat kann insbesondere zugegeben werden als Alkalimetallnitrat, Ammoniumnitrat, Schwermetallnitrat, als Salpetersäure oder/und entsprechende organische Verbindung. Das Nitrat kann die Neigung zum Anrosten insbesondere bei Oberflächen von Stahl und Eisen deutlich vermindern. Das Nitrat kann gegebenenfalls beitragen zur Ausbildung einer fehlerfreien Beschichtung oder/und einer außergewöhnlich ebenen Beschichtung, die gegebenenfalls frei von optisch erkennbaren Markierungen ist.

Vorzugsweise enthält die Zusammensetzung einen Gehalt an mindestens einer Art Kationen ausgewählt aus Alkalimetallionen, Ammoniumionen und entsprechenden Verbindungen, insbesondere an Kalium- oder/und Natriumionen bzw. an mindestens einer entsprechenden Verbindung.

Gegebenenfalls enthält die Zusammensetzung einen Gehalt an freiem Fluorid im Bereich von 0,001 bis 3 g/L, berechnet als F⁻. Bevorzugt liegt der Gehalt im Bereich von 0,01 bis 1 g/L, besonders bevorzugt im Bereich von 0,02 bis 0,5 g/L, ganz besonders bevorzugt im Bereich bis 0,1 g/L. Es wurde ermittelt, dass es in vielen Ausführungsvarianten vorteilhaft ist, einen geringen Gehalt an freiem Fluorid im Bad zu haben, weil das Bad dann in vielen Ausführungsformen stabilisiert werden kann. Ein zu hoher Gehalt an freiem Fluorid kann manchmal die Abscheidungsrate an Kationen negativ beeinflussen. Daneben kann in vielen Fällen auch nicht-dissoziiertes oder/und nicht komplex-gebundenes Fluorid insbesondere im Bereich von 0,001 bis 0,3 g/L auftreten. Ein solcher Zusatz wird vorzugsweise in Form von Flußsäure oder/und deren Salzen zugesetzt.

Vorzugsweise enthält die Zusammensetzung einen Gehalt an mindestens einer Fluorid-haltigen Verbindung oder/und Fluorid-Anionen, berechnet als F⁻ und ohne Einbeziehung von Komplexfluoriden, insbesondere mindestens ein Fluorid von Alkalifluorid(en), Ammoniumfluorid oder/und Flußsäure, besonders bevorzugt im Bereich von 0,001 bis 12 g/L, ganz besonders bevorzugt im Bereich von 0,005 bis 8 g/L, insbesondere im Bereich von 0,01 bis 3 g/L. Die Fluoridionen bzw. entsprechende Verbindungen können helfen, die Abscheidung der Metallionen auf der metallische Oberfläche zu kontrollieren bzw. zu steuern, so dass z.B. die Abscheidung der mindestens einen Zirkonium-Verbindung bei Bedarf verstärkt oder verringert werden kann. Vorzugsweise ist das Gewichtsverhältnis der Summe der Komplexfluoride berechnet als Summe der zugehörigen Metalle zur Summe der freien Fluoride berechnet als F⁻ größer 1 : 1, besonders bevorzugt größer als 3 : 1, ganz besonders bevorzugt größer als 5 : 1, besonders bevorzugt größer als 10 : 1.

Bei dem erfindungsgemäßen Verfahren kann die wässerige Zusammensetzung einen Gehalt an mindestens einer Verbindung ausgewählt aus Alkoxiden, Carbonaten, Chelaten, Tensiden und Additiven wie z.B. Bioziden oder/und Entschäumern aufweisen.

Als Katalysator für die Hydrolyse eines Silans kann z.B. Essigsäure zugesetzt werden. Die Abstumpfung des pH-Wertes des Bades kann beispielsweise mit Ammoniak/Ammoniumhydroxid, einem Alkalihydroxid oder/und einer Verbindung auf Basis von Amin wie z.B. Monoethanolamin erfolgen, während der pH-Wert des Bades vorzugsweise mit Essigsäure, Hydroxyessigsäure oder/und Salpetersäure abgesenkt wird. Derartige Gehalte gehören zu den den pH-Wert beeinflussenden Substanzen.

Die zuvor genannten Gehalte bzw. Zusätze wirken in den erfindungsgemäßen wässerigen Zusammensetzungen in der Regel förderlich, indem sie die guten Eigenschaften der erfindungsgemäßen wässerigen Grundzusammensetzung aus den Komponenten a), b) und Lösemittel(n) noch weiter verbessern helfen. Diese Zusätze wirken in der Regel in gleicher Weise, wenn nur eine Titan- oder nur eine Zirkonium-Verbindung oder eine Kombination dieser eingesetzt wird. Es hat sich jedoch überraschend gezeigt, dass die Kombination von jeweils mindestens einer Titan- und von mindestens einer Zirkoniumverbindung, insbesondere als Komplexfluoride, die Eigenschaften vor allem der damit erzeugten Beschichtungen signifikant verbessert. Die verschiedenen Zusätze wirken damit erstaunlicherweise wie in einem Baukastensystem und tragen zur Optimierung der jeweiligen Beschichtung wesentlich bei. Gerade bei Verwendung eines sogenannten Multimetall-Mixes, wie er oft bei der Vorbehandlung von Karosserien und bei der Behandlung oder Vorbehandlung von verschiedenen Kleinteilen oder Montageteilen auftritt, hat sich die erfindungsgemäße wässerige Zusammensetzung sehr bewährt, da die Zusammensetzung mit den verschiedenen Zusätzen auf den jeweiligen Multimetall-Mix und seine Besonderheiten und Anforderungen spezifisch optimiert werden kann.

Bei dem erfindungsgemäßen Verfahren kann mit der wässerigen Beschichtung im gleichen Bad ein Mix aus verschiedenen metallischen Werkstoffen beschichtet werden wie z.B. bei Karosserien oder bei unterschiedlichen Kleinteilen. Hierbei können beispielsweise Substrate mit metallischen Oberflächen ausgewählt aus Gusseisen, Stahl, Aluminium, Aluminiumlegierungen, Magnesiumlegierungen, Zink und Zinklegierungen in einem beliebigen Mix gleichzeitig oder/und nacheinander erfindungsgemäß beschichtet werden, wobei die Substrate zumindest teilweise metallisch beschichtet sein können oder/und zumindest teilweise aus mindestens einem metallischen Werkstoff bestehen können.

Soweit nicht mindestens eine weitere Komponente oder/und Spuren an weiteren Substanzen enthalten sind, besteht der Rest auf 1000 g/L aus Wasser oder aus Wasser und mindestens einem organischen Lösemittel wie z.B. Äthanol, Methanol, Isopropanol bzw. Dimethylformamid (DMF). Vorzugsweise ist der Gehalt an organischen Lösemitteln in den meisten Ausführungsformen besonders niedrig oder Null. Aufgrund der Hydrolyse des mindestens einen enthaltenen Silans kann ein Gehalt insbesondere an mindestens einem Alkohol wie z.B. Äthanol oder/und Methanol auftreten. Besonders bevorzugt ist, kein organisches Lösemittel zuzusetzen.

Vorzugsweise ist die Zusammensetzung frei von oder im wesentlichen frei von allen Arten von Partikeln oder von Partikeln größer 0,02 µm mittlerem Durchmesser, die gegebenenfalls z.B. auf Basis von Oxiden wie z.B. SiO₂ zugesetzt werden könnten.

Erst wenn die Beschichtungen z.B. 5 Minuten bei 80 °C PMT (peak-metaltemperature), z.B. 25 Minuten bei 70 °C PMT oder stärker getrocknet sind, sind diese Beschichtungen in der Regel gegen Wasser unempfindlich, da die Kondensation der Silane/Silanole/Siloxane/Polysiloxane stärker fortgeschritten ist. Der Grad der Trocknung, der mit einer Kondensation verbunden ist, und der zu einer Spülfestigkeit der Siloxan/Polysiloxan-haltigen Beschichtung variiert je nach dem Phasenbestand, der Beschichtung und der Art des Spülens.

Die aufgebrachte Siloxan/Polysiloxan-haltige Beschichtung ist vorzugsweise frisch aufgebracht oder/und ist gegebenenfalls nicht oder nur leicht angetrocknet, wenn gespült wird. Die Beschichtung wird vorzugsweise innerhalb von 20 Sekunden nach dem Aufbringen gespült. Da die Silan-haltige wässerige Zusammensetzung beim Aufbringen vorzugsweise eine Temperatur im Bereich von 10 bis 50 °C aufweist, besonders bevorzugt im Bereich von 15 bis 35 °C, und da auch der zu beschichtende Gegenstand vorzugsweise eine Temperatur im Bereich von 10 bis 50 °C aufweist, besonders bevorzugt im Bereich von 15 bis 35 °C, sind diese Temperaturen üblicherweise nicht so hoch und meist nicht so unterschiedlich, dass eine schnelle Trocknung des Nassfilms auftritt.

Beim Spülen wird als Fluid vorzugsweise ein flüssiges Partikel-freies Fluid, insbesondere Wasser oder eine Lösung, eingesetzt. Das Fluid ist besonders bevorzugt Wasser von Stadtwasserqualität, eine reine Wasserqualität wie z.B. voll entsalztes Wasser (VE-Wasser) oder eine Wasserqualität mit einem Gehalt z.B. von mindestens einem Tensid, der eine Vergleichmäßigung des Nassfilms bewirken kann. Das Fluid weist vorzugsweise eine Temperatur im Bereich von 10 bis 50 °C auf, besonders bevorzugt im Bereich von 15 bis 35 °C. Es kann die mit dem Nassfilm beschichteten Gegenstände durch Tauchen in ein Bad oder/und in einen Flüssigkeitsstrahl oder -film, durch Spritzen, durch Sprühen oder durch eine ähnliche Form des Benetzens in dem Flüssigkeitsfilm oder/und -strahl eines Spülrings benetzen. Vorzugsweise tritt der Flüssigkeitsstrahl oder -film nicht mit einem Druck über 2 bar auf die Silan/Silanol/Siloxan/Polysiloxan enthaltende Beschichtung.

Vorzugsweise ist die Zusammensetzung arm an, im wesentlichen frei oder frei von höheren Gehalten oder Gehalten an Wasserhärtebildnern wie z.B. Kalziumgehalte über 1 g/L. Vorzugsweise ist die wässerige Zusammensetzung frei oder arm an Blei, Cadmium, Chromat, Kobalt, Nickel oder/und anderen giftigen Schwermetallen. Vorzugsweise werden solche Substanzen nicht absichtlich zugesetzt, wobei jedoch mindestens ein Schwermetall aus einer metallischen Oberfläche herausgelöst, zum Beispiel aus einem anderen Bad eingeschleppt werden kann oder/und als Verunreinigung auftreten kann. Vorzugsweise ist die Zusammensetzung arm an, im wesentlichen frei von oder gänzlich frei von Bromid, Chlorid und Jodid, da diese unter Umständen zur Korrosion beitragen können.

Die Schichtdicke der erfindungsgemäß hergestellten Beschichtungen liegt vorzugsweise im Bereich von 0,005 bis 0,3 µm, besonders bevorzugt im Bereich von 0,01 bis 0,25 µm, ganz besonders bevorzugt im Bereich von 0,02 bis 0,2 µm, vielfach bei etwa 0,04 µm, bei etwa 0,06 µm, bei etwa 0,08 µm, bei etwa 0,1 µm, bei etwa 0,12 µm, bei etwa 0,14 µm, bei etwa 0,16 µm oder bei etwa 0,18 µm. Die organisches Monomer, Oligomer, Polymer, Copolymer oder/und Blockcopolymer enthaltenden Beschichtungen sind häufig etwas dicker als solche, die hiervon frei oder fast frei sind.

Vorzugsweise wird mit der Zusammensetzung eine Beschichtung mit einem Schichtgewicht ausgebildet, das bezogen nur auf Titan oder/und Zirkonium im Bereich von 1 bis 200 mg/m² liegt berechnet als elementares Titan. Besonders bevorzugt liegt dieses Schichtgewicht im Bereich von 5 bis 150 mg/m², ganz besonders bevorzugt im Bereich von 8 bis 120 mg/m², insbesondere bei etwa 10, etwa 20, etwa 30, etwa 40, etwa 50, etwa 60, etwa 70, etwa 80, etwa 90, etwa 100 oder etwa 110 mg/m².

Vorzugsweise wird mit der Zusammensetzung eine Beschichtung mit einem Schichtgewicht ausgebildet, das bezogen nur auf Siloxane/Polysiloxane im Bereich von 0,2 bis 1000 mg/m² liegt berechnet als das entsprechende weitgehend durchkondensierte Polysiloxan. Besonders bevorzugt liegt dieses Schichtgewicht im Bereich von 2 bis 200 mg/m², ganz besonders bevorzugt im Bereich von 5 bis 150 mg/m², insbesondere bei etwa 10, etwa 20, etwa 30, etwa 40, etwa 50, etwa 60, etwa bei 70, etwa 80, etwa 90, etwa 100, etwa 110, etwa bei 120, etwa 130 oder etwa 140 mg/m².

Alternativ zu der bisher vorgeschlagenen Verfahrensabfolge, die auch der Verfahrensabfolge der nachfolgenden Tabelle 1 zugrunde liegt, ist es einerseits möglich, vor der erfindungsgemäßen Silan-Vorbehandlung auch ein Vorspülen oder/und ein erstes Silan-Beschichten mit einer wässerigen Zusammensetzung auszuführen, die mindestens ein Silan, mindestens eine Verbindung ausgewählt aus Fluorid-freien Verbindungen von Titan, Hafnium, Zirkonium, Aluminium und Bor, mindestens eine stärker verdünnte Lauge wie NaOH oder/und mindestens ein Komplexfluorid enthält, oder/und andererseits mindestens ein Spülen nach der erfindungsgemäßen Silan-Vorbehandlung mit einer wässerigen Zusammensetzung auszuführen, die nicht nur Wasser enthält und die gegebenenfalls mindestens ein Tensid zur Vergleichmäßigung des Nassfilms enthält. Es wurde jedoch gefunden, dass die Eigenschaften der Beschichtungen, die mit einem derartigen Vorspülen oder/und Nachspülen sowie mit der erfindungsgemäßen Silan-Vorbehandlung hergestellt wurden, wenn vorher gespült, immer signifikant etwas weniger gute Ergebnisse bei allen Korrosions- und Lackhaftungswerten ergaben, wenn das Vorspülen nicht nur mit Wasser oder stark verdünnte Lauge enthaltendem Wasser und das Nachspülen mehr als Wasser und mindestens ein Tensid enthielt.

Die mit der erfindungsgemäßen wässerigen Zusammensetzung hergestellte Beschichtung kann bei Bedarf anschließend mit mindestens einem Primer, Lack, Klebstoff oder/und mit einer lackähnlichen organischen Zusammensetzung beschichtet werden, wobei gegebenenfalls mindestens eine dieser weiteren Beschichtungen durch Erwärmen oder/und Bestrahlen gehärtet wird.

Die nach dem erfindungsgemäßen Verfahren beschichteten metallischen Substrate können verwendet werden in der Automobilindustrie, für Schienenfahrzeuge, in der Luft- und Raumfahrtindustrie, im Apparatebau, im Maschinenbau, in der Bauindustrie, in der Möbelindustrie, für die Herstellung von Leitplanken, Lampen, Profilen, Verkleidungen oder Kleinteilen, für die Herstellung von Karosserien oder Karosserieteilen, von Einzelkomponenten, vormontierten bzw. verbundenen Elementen vorzugsweise in der Automobil- oder Luftfahrtindustrie, für die Herstellung von Geräten oder Anlagen, insbesondere von Haushaltsgeräten, Kontrolleinrichtungen, Prüfeinrichtungen oder Konstruktionselementen.

Die bestehenden Anlagen für die Reinigung und Phosphatierung von Karosserien vor der Lackierung weisen häufig die folgenden, in der mittleren Spalte der Tabelle 1 dargestellten Prozeßstufen auf. In der rechten Spalte werden die Prozeßstufen wiedergegeben, die sich überraschend in einem verkürzten Prozeßablauf für die Reinigung und Silan-Beschichtung von Karosserien empfohlen haben.

**Tabelle 1: Typische Abfolge der Prozeßstufen beim Phosphatieren bzw. empfohlene Abfolge beim Silan-Beschichten von Karosserien**

| | Phosphatieren | Silan-Beschichten |
|---|---|---|
| Alkalisches Reinigen 1 | erwärmt | erwärmt |
| Alkalisches Reinigen 2 | erwärmt | erwärmt |
| Spülen 1 | Stadtwasser | Stadtwasser |
| Spülen 2 | Stadtwasser | VE-Wasser |
| Aktivieren | sehr oft, mit Ti- oder Zn-Phosphat | (entfällt) |
| Spülen 3 | Optional, wenn vorher nicht aktiviert wird | (entfällt) |
| Vorbehandlung | Phosphatieren, erwärmt | Silan-Beschichten |
| Spülen 4 | Stadtwasser | VE-Wasser |
| Spülen 5 | VE-Wasser | VE-Wasser |
| Nachspüllösung | optional | (entfällt) |
| Spülen 6 | VE-Wasser | (entfällt) |
| Spülring | optional | (entfällt) |

Es hat sich weiterhin überraschend gezeigt, dass es nicht nur möglich ist, mit bestimmten Lösungen, die nicht nur auf Silan basieren, Beschichtungen herzustellen, die auch ohne ein stärkeres Trocknen der frisch aufgetragenen Beschichtung nicht nur ausreichend spülfest gegen Wasser sind, sondern sogar noch etwas bessere Schichteigenschaften als vergleichbare durchgetrocknete Beschichtungen aufweisen. Offenbar sind die nicht stärker getrockneten, auf Silan basierenden Beschichtungen gegenüber einem Lack oder einer lackähnlichen Zusammensetzung wie z.B. kathodischem Tauchlack reaktiver und weisen dadurch eine ausreichende Haftung auf. Dadurch ist es möglich, auf den bisher als erforderlich angesehenen Trockenschritt und auf den u.U. über 10 Meter langen Trocknungskanal zu verzichten.

Aufgrund der mehrere Jahrzehnte dauernden Entwicklung der ZinkMangan-Nickel-Phosphatierungen von Karosserien sind die derartigen, heute hergestellten Phosphatschichten außerordentlich hochwertig. Dennoch gelang es wider Erwarten, die gleichen hochwertigen Eigenschaften mit den Silan-haltigen Beschichtungen zu erreichen. Mit dem erfindungsgemäßen Verfahren ist es überraschenderweise möglich, die Vorbehandlung von Karosserien mit auf Silan basierenden Lösungen bei relativ geringen Gehalten der wässerigen Zusammensetzungen durchzuführen, ohne die Qualität der Beschichtungen zu beeinträchtigen. Wenn jedoch deutlich höhere Gehalte an den Komponenten des Bades gewählt werden, erhöht das die Kosten, während die Qualität der damit erzeugten Beschichtungen meistens nicht mehr gesteigert werden kann.

Mit dem erfindungsgemäßen Verfahren ist es möglich, den Vorbehandlungsschritt von 3 bis 5 Minuten beim Phosphatieren auf ca. 2 Minuten beim Beschichten mit auf Silan basierenden Beschichtungen zu verringern und auf das Erwärmen wie beim Phosphatieren auf Temperaturen oft im Bereich von 50 bis 60 °C zu verzichten. Wenn jedoch die Zusammensetzung niedriger ist, wird die Badtemperatur vorzugsweise auf Temperaturen im Bereich von 15 bis 25 °C erwärmt.

Mit dem erfindungsgemäßen Verfahren ist es möglich, die Vorbehandlung von Karosserien nicht nur in kürzeren und deutlich kostengünstiger zu betreibenden Anlagen durchzuführen, sondern auch erheblich umweltfreundlicher zu betreiben, da die Mengen an zu entsorgendem Schwermetall enthaltendem Schlamm auf ein Minimum reduziert werden können und da Wasser noch stärker im Kreislauf geführt werden kann und da auch der Wasserdurchsatz deutlich verringert werden kann. Daher können sowohl die Verbräuche an Chemikalien, als auch die Aufwendungen bei der Aufbereitung deutlich verringert werden. Denn es fällt weniger als 1 % der bisher beim Phosphatieren auftretenden Schlamm-Mengen bezogen auf die zu beschichtende metallische Oberfläche an, so dass der Aufwand der Entsorgung von chemischen Abfällen stark verringert wird.

Ein Zusatz von Mangan hat sich überraschend als besonders vorteilhaft erwiesen: Obwohl offenbar keine oder fast keine Manganverbindung auf der metallischen Oberfläche abgeschieden wird, fördert der Zusatz die Abscheidung von Silan/Silanol/Siloxan/Polysiloxan auf der metallischen Oberfläche stark. Bei einem Zusatz von Nitroguanidin wurde überraschend festgestellt, dass die Optik der beschichteten Bleche sehr gleichmäßig ist, insbesondere auch auf sensiblen Oberflächen wie sandgestrahlten Eisen- bzw. Stahloberflächen. Ein Zusatz von Nitrit hat die Anrosteignung von Stahl-Substraten unerwartet deutlich verringert. Erstaunlicherweise wurde gefunden, dass jeder Zusatz mit einer signifikanten positiven Wirkung, der in dieser Anmeldung genannt wird, eine additive Wirkung zur Verbesserung der erfindungsgemäßen Beschichtung hat: Durch Auswahl mehrerer Zusätze ähnlich wie bei einem Baukastensystem lassen sich die verschiedenen Eigenschaften insbesondere eines Multimetallsystems weiter optimieren.

Es wurde jetzt überraschend festgestellt, dass eine gute Multimetall-Behandlung mit einer einzigen wässerigen Zusammensetzung erst möglich ist, wenn ein Komplexfluorid eingesetzt wurde, und dass eine sehr gute Multimetall-Behandlung mit einer einzigen wässerigen Zusammensetzung erst möglich ist, wenn mindestens zwei verschiedene Komplexfluoride verwendet werden wie z.B. solche auf Basis von Titan und von Zirkonium. Die einzeln eingesetzten Komplexfluoride zeigten bei den verschiedensten Versuchen nie Ergebnisse, die gleich gut waren wie für die Kombination dieser beiden Komplexfluoride, unabhängig davon, welche Zusätze darüber hinaus dazugegeben wurden.

Dass eine derart starke Qualitätssteigerung von wässerigen Zusammensetzungen mit einem Gehalt von Silan/Silanol/Siloxan/Polysiloxan möglich ist, war nicht absehbar. Aber auch ausgehend von wässerigen Zusammensetzungen auf Basis von einem Silan und nur einem Komplexfluorid auf Basis von Titan oder von Zirkonium stellte sich überraschenderweise eine deutliche Steigerung des Qualitätsniveaus bei allen Versuchen heraus.

Es war darüber hinaus erstaunlich, dass sich bei der Prüfung der Lackhaftung sogar auf Stahl Steinschlag-Noten von 1 oder 2 ergaben, wenn nach dem erfindungsgemäßen Verfahren eine Zusammensetzung, die mindestens ein Silan und mindestens ein Komplexfluorid enthält, aufgebracht wird: Stahl hat sich als das problematischste Material für wässerige Zusammensetzungen auf Basis von einem Silan und nur einem Komplexfluorid auf Basis von Titan oder von Zirkonium, insbesondere bei der Korrosionsbeständigkeit, erwiesen (siehe beispielsweise B 5).

Bei Aluminium und Aluminium-Legierungen ist der CASS-Test erfahrungsgemäß problematisch, der jedoch auch mit den erfindungsgemäßen Zusammensetzungen deutlich besser als erwartet ausgefallen ist.

### Beispiele und Vergleichsbeispiele:

Die im Folgenden beschriebenen erfindungsgemäßen Beispiele (B) und die Vergleichsbeispiele (VB) sollen den Gegenstand der Erfindung näher erläutern. Die Angabe "a" bei den Beispielen und Vergleichsbeispielen verdeutlicht die Anwendung des Naß-Naß-Verfahrens, während die mit der Silan-Vorbehandlung beschichteten Bleche der Beispiele und Vergleichsbeispiele ohne die Angabe "a" vor dem Aufbringen eines Elektrotauchlacks (e-coat) getrocknet wurden.

Die wässerigen Badzusammensetzungen werden als Gemische entsprechend Tabelle 2 unter Verwendung von bereits vorhydrolysierten Silanen hergestellt. Sie enthalten jeweils vorwiegend ein Silan und gegebenenfalls auch geringe Gehalte an mindestens einem ähnlichen weiteren Silan, wobei auch hier vereinfachend von Silan und nicht von Silan/Silanol/Siloxan/Polysiloxan gesprochen wird und wobei sich in der Regel diese Vielfalt an Verbindungen, teilweise in größerer Zahl ähnlicher Verbindungen, auch bis in die Ausbildung der Beschichtung hindurchzieht, so dass auch in der Beschichtung oft mehrere ähnliche Verbindungen vorliegen. Das Vorhydrolysieren kann je nach Silan auch über mehrere Tage bei Raumtemperatur unter kräftigem Rühren andauern, soweit die einzusetzenden Silane nicht bereits vorhydrolysiert vorliegen. Zum Vorhydrolysieren des Silans wird das Silan in Wasser im Überschuss gegeben und gegebenenfalls mit Essigsäure katalysiert. Allein wegen des Einstellens des pH-Wertes wurde Essigsäure nur bei einzelnen Ausführungsvarianten zugesetzt. In einigen Ausführungsvarianten ist Essigsäure als Katalysator für die Hydrolyse bereits enthalten. Ethanol entsteht bei der Hydrolyse, wird aber nicht zugesetzt. Das fertige Gemisch wird frisch eingesetzt.

Dann werden jeweils pro Versuch mindestens 3 zuvor mit einem wässerigen alkalischen Reiniger gereinigte und mit Brauchwasser sowie danach mit VE-Wasser gespülte Bleche aus kaltgewalztem Stahl (CRS), Aluminiumlegierung Al6016 bzw. aus beidseitig feuerverzinktem oder elektrolytisch verzinktem Stahl bzw. aus mit Galvaneal® (ZnFe-Schicht auf Stahl) mit der entsprechenden Behandlungsflüssigkeit beidseitig bei 25 °C durch Spritzen, Tauchen oder Rollcoater-Behandlung in Kontakt gebracht. Unmittelbar danach werden die derart vorbehandelten Bleche mit VE-Wasser kurz gespült. Die Bleche der Vergleichsbeispiele werden bei 90 °C PMT getrocknet und anschließend mit einem kathodischen Automobil-Tauchlack (KTL) lackiert. Die Bleche der erfindungsgemäßen Beispiele werden jedoch nach der Silan-Vorbehandlung sofort gespült und unmittelbar nach dem Spülen in das KTL-Bad getaucht. Danach wurden diese Bleche mit einem vollständigen, kommerziell genutzten Automobillackaufbau (Füller, Decklack, Klarlack; insgesamt einschließlich KTL ca. 105 µm Dicke des Schichtenpakets) versehen und auf ihren Korrosionsschutz und ihre Lackhaftung geprüft. Die Zusammensetzungen und Eigenschaften der Behandlungsbäder sowie die Eigenschaften der Beschichtungen werden in Tabelle 2 zusammengefasst.

Das organofunktionelle Silan A ist ein Amino-funktionelles Trialkoxysilan und hat eine Aminogruppe pro Molekül. Es liegt wie alle hierbei eingesetzten Silane in der wässerigen Lösung weitgehend oder in etwa vollständig hydrolysiert vor. Das organofunktionelle Silan B hat jeweils eine endständige Aminogruppe sowie jeweils eine Iminogruppe pro Molekül. Das nichtfunktionelle Silan C ist ein Bis-trialkoxysilan; das entsprechende hydrolysierte Molekül weist an zwei Siliciumatomen bis zu 6 OH-Gruppen auf.

Die Komplexfluoride von Titan bzw. Zirkonium werden weitgehend auf der Basis eines MeF₆-Komplexes eingesetzt. Mangan wird als metallisches Mangan der jeweiligen Komplexfluoridlösung zugesetzt und darin gelöst. Diese Lösung wird der wässerigen Zusammensetzung beigemischt. Falls kein Komplexfluorid verwendet wird, wird Mangannitrat zugesetzt. Das silylierte Epoxy-Polymer hat einen geringen Gehalt an OH⁻- und an Isocyanat-Gruppen und ist daher auch nachträglich bei Temperaturen über 100 °C chemisch vernetzbar.

Die in der wässerigen Zusammensetzung - Konzentrat oder/und Bad - enthaltenen Silane sind Monomere, Oligomere, Polymere, Copolymere oder/und Reaktionsprodukte mit weiteren Komponenten aufgrund Hydrolysereaktionen, Kondensationsreaktionen oder/und weiteren Reaktionen. Die Reaktionen erfolgen vor allem in der Lösung, beim Trocknen bzw. gegebenenfalls auch beim Härten der Beschichtung, insbesondere bei Temperaturen über 70 °C. Alle Konzentrate und Bäder erwiesen sich über eine Woche stabil und ohne Veränderungen und ohne Ausfällungen. Es wurde kein Ethanol zugesetzt. Gehalte an Ethanol in den Zusammensetzungen stammen nur aus chemischen Reaktionen.

Der pH-Wert wird bei den meisten Beispielen und Vergleichsbeispielen eingestellt, bei Anwesenheit von mindestens einem Komplexfluorid mit Ammoniak, in anderen Fällen mit einer Säure. Alle Bäder zeigen eine gute Qualität der Lösung und fast immer eine gute Badstabilität. Es gibt keine Ausfällungen in den Bädern. Nach dem Beschichten mit der Silan-haltigen Lösung wird bei den erfindungsgemäßen Beispielen sowie bei den Vergleichsbeispielen unmittelbar im Anschluß an die Silan-haltige Vorbehandlung zuerst mit VE-Wasser einmal kurz gespült. Der frisch aufgebrachte Nassfilm konnte nicht stärker antrocknen, da innerhalb von 5 Sekunden nach dem Aufbringen der Silan-haltigen Beschichtung gespült wurde. Sowohl das frisch beschichtete Substrat, als auch das Spülwasser wiesen Raumtemperatur auf. Um den Eintrag von Substanzen der Vorbehandlungslösung in das nachfolgende Lackbad zu vermeiden, war eine Spülen notwendig. Das frisch gespülte beschichtete Substrat wurde bei den Beispielen und Vergleichsbeispielen mit der Angabe "a" daraufhin unmittelbar in den kathodischen Tauchlack getaucht, so dass keine weitere Trocknung auftreten konnte. Die beschichteten Bleche der Vergleichsbeispiele ohne die Angabe "a" wurden dagegen unmittelbar nach dem Spülen bei 120 °C im Trockenschrank über 5 Minuten getrocknet, die der Beispiele und Vergleichsbeispiele unter Anwendung des Naß-Naß-Verfahrens wurden jedoch ohne Zwischentrocknung sofort danach mit einem kathodischen Tauchlack durch Tauchen beschichtet.

Die visuelle Prüfung der Beschichtungen kann nur bei den Beschichtungen auf Stahl aufgrund der Interferenzfarben signifikant durchgeführt werden und lässt die Gleichmäßigkeit der Beschichtung beurteilen. Die Beschichtungen ohne jeden Komplexfluoridgehalt sind recht ungleichmäßig. Eine Beschichtung mit Titan- und mit Zirkon-Komplexfluorid hat sich überraschend als deutlich gleichmäßiger erwiesen als wenn nur eines dieser Komplexfluoride appliziert worden wäre. Ein Zusatz von Nitroguanidin, Nitrat oder Nitrit verbessert ebenfalls die Gleichmäßigkeit der Beschichtung. Teilweise erhöht sich die Schichtdicke mit der Konzentration dieser Substanzen.

**Tabelle 2: Zusammensetzungen von Bädern in g/L bezogen auf Festkörpergehalte, bei Silanen bezogen auf das Gewicht der hydrolysierten Silane; Restgehalt: Wasser und meistens eine sehr geringe Menge an Äthanol; Prozessdaten und Eigenschaften der Beschichtungen**

| Vergleichsbeispiele VB | VB 1 | VB 1a | VB 2 | VB 2a | VB 3 | VB 3a | VB 4 | VB 4a | VB 5 | VB 5a | VB 6 | VB 6a | VB 7 | VB 7a | VB 8 | VB8 a | VB 9 | VB 9a |
|---|---|---|---|---|---|---|---|---|---|---|---|---|---|---|---|---|---|---|
| Organofunkt. Silan A | 0,2 | 0,2 | 0,2 | 0,2 | 0,2 | 0,2 | 0,2 | 0,2 | 0,2 | 0,2 | 0,1 | 0,1 | 0,3 | 0,3 | 0,2 | 0,2 | 0,2 | 0,2 |
| H₂TiF₆ als Ti | - | - | 0,2 | 0,2 | - | - | 0,2 | 0,2 | 0,2 | 0,2 | 0,1 | 0,1 | 0,3 | 0,3 | 0,2 | 0,2 | 0,2 | 0,2 |
| H₂ZrF₆ als Zr | - | - | - | - | 0,2 | 0,2 | 0,2 | 0,2 | 0,2 | 0,2 | 0,1 | 0,1 | 0,3 | 0,3 | 0,4 | 0,4 | 0,2 | 0,2 |
| Mn | - | - | - | - | - | - | - | - | 0,3 | 0,3 | - | - | - | - | 0,3 | 0,3 | - | - |
| Silyl. Epoxy-Polymer | - | - | - | - | - | - | - | - | - | - | - | - | - | - | - | - | 1,0 | 1,0 |
| pH-Wert | 10,5 | 10,5 | 4 | 4 | 4 | 4 | 4 | 4 | 4 | 4 | 4 | 4 | 4 | 4 | 4 | 4 | 4 | 4 |
| Schichtgewicht mg/m² aus Silanol und Metall | 10 - 20 | 10 - 20 | 20 - 50 | 20 - 50 | 20 - 50 | 20 - 50 | 20 - 50 | 20 - 50 | 20 - 60 | 20 - 60 | 10 - 40 | 10 - 40 | 30 - 80 | 30 - 80 | 30 - 80 | 30 - 80 | 50 - 100 | 50 - 100 |

| Gitterschnitt BMW: Note | | | | | | | | | | | | | | | | | | |
|---|---|---|---|---|---|---|---|---|---|---|---|---|---|---|---|---|---|---|
| Stahl | 4 | 3 | 5 | 5 | 3 | 2 | 2 | 1 | 1 | 0 | 2 | 1 | 1 | 1 | 1 | 0 | 1 | 1 |
| E-Zink auf Stahl | 3 | 3 | 4 | 3 | 4 | 3 | 1 - 2 | 1 | 1 | 0 | 1 | 1 | 1 | 1 | 1 | 1 | 0 | 0 |
| Feuerzink auf Stahl | 2 | 2 | 4 | 3 | 4 | 3 | 1 | 0 | 0 | 0 | 1 | 0 | 0-1 | 0-1 | 0-1 | 0 | 0 | 0 |
| AI 6016 | 2 | 2 | 2 | 2 | 2 | 2 | 1 | 1 | 1 | 0 | 2 | 1 | 1 | 1 | 1 | 0 | 1 | 1 |
| Galvaneal® | 1 | 1 | 1 | 1 | 2 | 1 | 1 | 0 | 1 | 0 | 1 | 0 | 0 | 0 | 0 | 0 | 0 | 0 |

| 10 Zyklen VDA mm Unterwanderung: | | | | | | | | | | | | | | | | | | |
|---|---|---|---|---|---|---|---|---|---|---|---|---|---|---|---|---|---|---|
| Stahl | 8 | 6 | 7 | 5 | 4 | 3 | 3 | 2,5 | 2 | 1 | 3,5 | 2 | 1,5 | 1,5 | 1,5 | < 1 | 2,5 | 2 |
| E-Zink auf Stahl | 5 | 4 | 3 | 2,5 | 4 | 4 | 2 | 1 | 1 | < 1 | 3 | 1,5 | 1,5 | 1 | 1 | < 1 | 1 | < 1 |
| Feuerzink auf Stahl | 4 | 4 | 2,5 | 2 | 3,5 | 3 | < 1 | < 1 | < 1 | < 1 | 1,5 | 1 | 1 | 1 | 1 | < 1 | < 1 | < 1 |
| Galvaneal® | 2 | 2 | 2 | 1 | 1,5 | 1,5 | < 1 | 0 | < 1 | < 1 | 1 | 1 | < 1 | < 1 | < 1 | < 1 | 0 | 0 |

| Vergleichsbeispiele VB | VB 1 | VB 1a | VB 2 | VB 2a | VB 3 | VB 3a | VB 4 | VB 4a | VB 5 | VB 5a | VB 6 | VB 6a | VB 7 | VB 7a | VB 8 | VB 8a | VB 9 | VB 9a |
|---|---|---|---|---|---|---|---|---|---|---|---|---|---|---|---|---|---|---|
| Steinschlag nach VDA-Belastung, Note | | | | | | | | | | | | | | | | | | |
| Stahl | 5 | 5 | 4 | 4 | 4 | 3 | 2 - 3 | 1 | 1 | 1 | 2 | 2 | 2 | 1 | 1 - 2 | 1 | 1 | 0 - 1 |
| E-Zink auf Stahl | 5 | 4 | 3 | 2 | 4 | 3 | 2 | 1 | 1 | 1 | 2 | 1 | 1 - 2 | 0 | 1 | 0 | 1 | 0 - 1 |
| Feuerzink auf Stahl | 5 | 4 | 3 | 2 | 4 | 3 | 1 | 0 | 1 | 0 | 1 | 1 | 1 | 0 | 1 | 0 | 0 | 0 |
| Galvaneal® | 4 | 4 | 2 | 2 | 3 | 2 | 1 - 2 | 0 | 1 | 0 | 1 | 0 - 1 | 0 | 0 | 0 | 0 | 0 | 0 |

| Salzsprühtest 1008 h: | | | | | | | | | | | | | | | | | | |
|---|---|---|---|---|---|---|---|---|---|---|---|---|---|---|---|---|---|---|
| Stahl | 7 | 6 | 4 | 4 | 3,5 | 3 | 2 | 1,5 | 1,5 | < 1 | 2,5 | 2 | 1,5 | < 1 | 1,5 | < 1 | 1 | 1 |

| CASS-Test mm Unterwanderung | | | | | | | | | | | | | | | | | | |
|---|---|---|---|---|---|---|---|---|---|---|---|---|---|---|---|---|---|---|
| Al 6016 | 6 | 6 | 3,5 | 3 | 3,5 | 3 | 2,5 | 2,5 | 1,5 | 1 | 2,5 | 2 | 1,5 | 1 | 1,5 | 1 | 1,5 | 1 |

Alle Vergleichsbeispiele VB 1 bis VB 9 und VB 1a bis VB 9a zeigen - wenn man die verschiedenen metallischen Oberflächen, die beschichtet wurden, insgesamt betrachtet - eine signifikante Verbesserung im Vergleich zu dem jeweiligen Vergleichsbeispiel, wobei jeweils die gleiche Badzusammensetzung einmal mit anschließendem Trocknen (als Vergleichsbeispiel VB X) und einmal ohne anschließendes Trocknen (als Vergleichsbeispiel VB Xa) aufgebracht wurde.

Es war überraschend, dass sich diese Verbesserung, die gerade bei bereits guten Beschichtungsergebnissen nur eine begrenzte Verbesserung bringt, systematisch durch das Nicht-Trocknen nach dem Applizieren der wässerigen Zusammensetzung verbessert wird. Es ist erstaunlicherweise daher möglich, durch das Nicht-Trocknen eine signifikante Verbesserung zu erzielen, die durchgängig von der chemischen Zusammensetzung des wässerigen Bades nahezu unabhängig ist. Es war weiterhin erstaunlich, dass diese Verbesserung sowohl bei den nur Silan enthaltenden Lösungen, als auch bei den Silan und Komplexfluorid bzw. gegebenenfalls auch noch Manganionen enthaltenden Lösungen auftrat. Daher wird angenommen, dass eine gleichartige stetige Verbesserung vom Trocknen zum Nicht-Trocknen auch bei ähnlich zusammengesetzten oder bei etliche unterschiedliche Substanzen enthaltenden Lösungen auf Basis von Silan oder auf Basis von Silan und Komplexfluorid auftritt. Je mehr unterschiedliche Substanzen enthalten sind und je höher deren an sich geringe Gehalte sind, desto besser können die Korrosionsbeständigkeit und die Lackhaftung sein, soweit nicht ein gegebenenfalls auftretendes Optimum überschritten ist.

Das Schichtgewicht variiert nicht nur nach den Gehalten der einzelnen Bestandteile der wässerigen Lösungen, sondern auch nach der Art der jeweiligen metallische Oberfläche, die beschichtet wird. Durch die Auswahl der Badkomponenten und ihrer Gehalte lässt sich insgesamt eine sehr deutlich Verbesserung der Korrosionsbeständigkeit und Lackhaftung erzielen.

Die Badzusammensetzungen zeigen sich alle in der kurzen Einsatzzeit als stabil und gut applizierbar. Es gibt keine Unterschiede im Verhalten, im visuellen Eindruck und bei den Testergebnissen zwischen den verschiedenen Beispielen und Vergleichsbeispielen, die auf die Behandlungsbedingungen wie z.B. Applikation durch Spritzen, Tauchen oder Rollcoater-Behandlung zurückgeführt werden können.

Die hierbei entstandenen Filme sind transparent und fast alle weitgehend gleichmäßig. Sie zeigen keine Einfärbung der Beschichtung. Die Struktur, der Glanz und die Farbe der metallischen Oberfläche erscheinen durch die Beschichtung nur wenig verändert. Bei einem Gehalt an Titan- oder/und Zirkoniumkomplexfluorid entstehen insbesondere auf Stahloberflächen irisierende Schichten. Die Kombination von mehreren Silanen hat bisher keine signifikante Verbesserung des Korrosionsschutzes ergeben, kann jedoch nicht ausgeschlossen werden. Darüber hinaus wurde auf Aluminium-reichen metallischen Oberflächen ein Gehalt an H₃AlF₆ ermittelt aufgrund entsprechender Reaktionen in der wässerigen Zusammensetzung. Die Kombination von zwei oder drei Komplexfluoriden in der wässerigen Zusammensetzung hat sich jedoch überraschend außerordentlich bewährt.
Die Schichtdicke der derart hergestellten Beschichtungen lag - auch von der Art des Auftrags abhängig, der anfangs in gesonderten Versuchen variiert wurde - im Bereich von 0,01 bis 0,16 µm, meistens im Bereich von 0,02 bis 0,12 µm, oft bei bis zu 0,08 µm, wobei sie deutlich größer war bei Zusatz von organischem Polymer.
Aufgrund der mehrere Jahrzehnte dauernden Entwicklung der ZinkManganNickel-Phosphatierung von Karosserien sind die derartigen, heute hergestellten Phosphatschichten außerordentlich hochwertig. Dennoch gelang es wider Erwarten auch bei den erst seit wenigen Jahren eingesetzten Silan enthaltenden wässerigen Zusammensetzungen, die gleichen hochwertigen Eigenschaften auch mit den Silan-haltigen Beschichtungen zu erreichen, obwohl hierzu größere Anstrengungen erforderlich waren.
Die Korrosionsschutznoten gehen bei der Gitterschnitt-Prüfung gemäß DIN EN ISO 2409 nach Lagerung über 40 Stunden in 5 %iger NaCI-Lösung entsprechend BMW-Spezifikation GS 90011 von 0 bis 5, wobei 0 die besten Werte wiedergibt. Beim Salzsprüh-Kondenswasser-Wechseltest über 10 Zyklen gemäß dem VDA-Prüfblatt 621-415 mit wechselnder Korrosionsbelastung zwischen Salzsprühtest, Schwitzwassertest und Trocknungspause wird die Unterwanderung einseitig vom Ritz aus gemessen und in mm angegeben, wobei die Unterwanderung möglichst klein sein soll. Beim Steinschlag-Test gemäß DIN 55996-1 werden die beschichteten Bleche im Anschluss an den oben genannten VDA-Wechseltest über 10 Zyklen mit Stahlschrot beschossen: Das Schadensbild wird mit Kennwerten von 0 bis 5 charakterisiert, wobei 0 die besten Ergebnisse wiedergibt. Beim Salzsprühtest gemäß DIN 50021 SS werden die beschichteten Bleche bei bis zu 1008 Stunden einer korrosiven Natriumchloridlösung durch Sprühen ausgesetzt; danach wird die Unterwanderung in mm vom Ritz aus gemessen, wobei der Ritz mit einem genormten Stichel bis zur metallischen Oberfläche hergestellt wird und wobei die Unterwanderung möglichst klein sein soll. Beim CASS-Test gemäß DIN 50021 CASS werden die beschichteten, aus einer Aluminium-Legierung bestehenden Bleche über 504 Stunden einer speziellen korrosiven Atmosphäre durch Sprühen ausgesetzt; danach wird die Unterwanderung in mm vom Ritz aus gemessen, die möglichst klein sein soll.

Weitere Versuche an Karosserie-Elementen haben gezeigt, dass gegebenenfalls die elektrochemischen Bedingungen des KTL-Bades geringfügig an die andersartige Beschichtung angepasst werden könnten, aber ansonsten die hervorragenden Eigenschaften, die bei Laborversuchen gewonnen wurden, auch auf Karosserie-Elemente übertragbar sind.

## Patentansprüche

1. Verfahren zur Beschichtung von metallischen Oberflächen mit einer Silan/Silanol/Siloxan/Polysiloxan enthaltenden Zusammensetzung, wobei die Zusammensetzung neben Wasser und gegebenenfalls neben mindestens einem organischen Lösemittel oder/und mindestens einer den pH-Wert beeinflussenden Substanz
mindestens eine Verbindung a) ausgewählt aus Silanen, Silanolen, Siloxanen und Polysiloxanen enthält, von denen mindestens eine dieser Verbindungen noch kondensieren kann,
mindestens zwei Komplexfluoride b) ausgewählt aus Komplexfluoriden von Titan, Hafnium und Zirkonium, und gegebenenfalls auch
mindestens eine Art Kationen c) ausgewählt aus Kationen von Metallen der 1. bis 3. und 5. bis 8. Nebengruppe einschließlich Lanthaniden sowie der 2. Hauptgruppe des Periodensystems der Elemente oder/und mindestens eine entsprechende Verbindung oder/und
mindestens eine organische Verbindung d) enthält ausgewählt aus Monomeren, Oligomeren, Polymeren, Copolymeren und Blockcopolymeren,
wobei die mit dieser Zusammensetzung frisch aufgebrachte Beschichtung mit einem wässerigen Tensid-haltigen Fluid gespült wird und bis zu diesem Spülen nicht durchgetrocknet wird, so dass die mindestens eine kondensationsfähige Verbindung a) bis zum Spülen nicht stark kondensiert.

2. Verfahren nach Anspruch 1, **dadurch gekennzeichnet, dass** die mit der Zusammensetzung frisch aufgebrachte Beschichtung bis zum Applizieren einer nachfolgenden Beschichtung nicht durchgetrocknet wird, so dass die mindestens eine kondensationsfähige Verbindung a) bis zum Applizieren der nachfolgenden Beschichtung nicht stark kondensiert.

3. Verfahren nach Anspruch 2, **dadurch gekennzeichnet, dass** die nachfolgende Beschichtung eine zweite Konversionsschicht, eine Beschichtung infolge Applikation einer Nachspüllösung oder eine Beschichtung auf Basis eines Lacks, einer lackähnlichen Zusammensetzung, eines Primers oder eines Klebstoffs ist.

4. Verfahren nach einem der vorstehenden Ansprüche, **dadurch gekennzeichnet, dass** der pH-Wert der Zusammensetzung größer als 1,5 und kleiner als 9 ist.

5. Verfahren nach einem der vorstehenden Ansprüche, **dadurch gekennzeichnet, dass** die Zusammensetzung einen Gehalt an Silan/Silanol/Siloxan/Polysiloxan a) im Bereich von 0,005 bis 80 g/L aufweist, berechnet auf Basis der entsprechenden Silanole.

6. Verfahren nach einem der vorstehenden Ansprüche, **dadurch gekennzeichnet, dass** die Zusammensetzung mindestens ein Silan oder/und das entsprechende Silanol/Siloxan/Polysiloxan mit jeweils mindestens einer Amino-Gruppe, HarnstoffGruppe oder/und Ureido-Gruppe enthält.

7. Verfahren nach einem der vorhergehenden Ansprüche, **dadurch gekennzeichnet, dass** die Zusammensetzung einen Gehalt an Komplexfluoriden im Bereich von 0,01 bis 100 g/L aufweist berechnet als Summe der entsprechenden Metallkomplexfluoride berechnet als MeF₆.

8. Verfahren nach einem der vorstehenden Ansprüche, **dadurch gekennzeichnet, dass** die Zusammensetzung mindestens eine Art Kationen c) ausgewählt aus Kationen von Cer, Chrom, Eisen, Kalzium, Kobalt, Kupfer, Magnesium, Mangan, Molybdän, Nickel, Niob, Tantal, Yttrium, Zink, Zinn und weiteren Lanthaniden enthält.

9. Verfahren nach einem der vorstehenden Ansprüche, **dadurch gekennzeichnet, dass** die Zusammensetzung einen Gehalt an Kationen und entsprechenden Verbindungen c) im Bereich von 0,01 bis 20 g/L aufweist berechnet als Summe der Metalle.

10. Verfahren nach einem der vorstehenden Ansprüche, **dadurch gekennzeichnet, dass** die Zusammensetzung einen Gehalt an organischen Verbindungen d) im Bereich von 0,01 bis 200 g/L aufweist berechnet als Summe der entsprechenden Verbindungen.

11. Verfahren nach einem der vorstehenden Ansprüche, **dadurch gekennzeichnet, dass** mit der wässerigen Beschichtung im gleichen Bad ein Mix aus verschiedenen metallischen Werkstoffen beschichtet wird.

12. Verfahren nach einem der vorstehenden Ansprüche, **dadurch gekennzeichnet, dass** mit der Zusammensetzung eine Beschichtung ausgebildet wird, die bezogen nur auf Titan oder/und Zirkonium im Bereich von 1 bis 200 mg/m² liegt berechnet als Titan.

13. Verfahren nach einem der vorstehenden Ansprüche, **dadurch gekennzeichnet, dass** mit der Zusammensetzung eine Beschichtung mit einem Schichtgewicht ausgebildet wird, das bezogen nur auf Siloxane/Polysiloxane im Bereich von 0,2 bis 1000 mg/m² liegt berechnet als das entsprechende weitgehend durchkondensierte Polysiloxan.

14. Verfahren nach einem der vorstehenden Ansprüche, **dadurch gekennzeichnet, dass** vor der Silan-Vorbehandlung gemäß einem der vorstehenden Ansprüche auch ein Vorspülen oder/und ein erstes Silan-Beschichten mit einer wässerigen Zusammensetzung ausgeführt wird, die mindestens ein Silan, mindestens eine Verbindung ausgewählt aus Fluorid-freien Verbindungen von Titan, Hafnium und Zirkonium, mindestens eine stärker verdünnte Lauge oder/und mindestens ein Komplexfluorid enthält.

15. Verfahren nach einem der vorstehenden Ansprüche, **dadurch gekennzeichnet, dass** nach der Silan-Vorbehandlung mindestens ein Spülen mit einer wässerigen Zusammensetzung ausgeführt wird, die nicht nur Wasser enthält und die mindestens ein Tensid zur Vergleichmäßigung des Nassfilms enthält.

16. Verfahren nach einem der vorstehenden Ansprüche, **dadurch gekennzeichnet, dass** die mit einer wässerigen Zusammensetzung hergestellte Beschichtung anschließend mit mindestens einem Primer, Lack, Klebstoff oder/und mit einer lackähnlichen organischen Zusammensetzung beschichtet wird, wobei gegebenenfalls mindestens eine dieser weiteren Beschichtungen durch Erwärmen oder/und Bestrahlen gehärtet wird.

17. Verwendung der nach dem Verfahren nach einem der Ansprüche 1 bis 16 beschichteten metallischen Substrate in der Automobilindustrie, für Schienenfahrzeuge, in der Luft- und Raumfahrtindustrie, im Apparatebau, im Maschinenbau, in der Bauindustrie, in der Möbelindustrie, für die Herstellung von Leitplanken, Lampen, Profilen, Verkleidungen oder Kleinteilen, für die Herstellung von Karosserien oder Karosserieteilen, von Einzelkomponenten, vormontierten bzw. verbundenen Elementen vorzugsweise in der Automobil- oder Luftfahrtindustrie, für die Herstellung von Geräten oder Anlagen, insbesondere von Haushaltsgeräten, Kontrolleinrichtungen, Prüfeinrichtungen oder Konstruktionselementen.

## Claims

1. A method for coating metallic surfaces with a composition comprising silane/silanol/siloxane/polysiloxane, where the composition, besides water and optionally besides at least one organic solvent and/or at least one pH modifier, comprises
at least one compound a) selected from silanes, silanols, siloxanes, and polysiloxanes, of which at least one of these compounds is still able to condense,
at least two complex fluorides b) selected from complex fluorides of titanium, hafnium, and zirconium, and optionally also
at least one kind of cations c) selected from cations of metals of transition groups 1 to 3 and 5 to 8, including lanthanides, and also from main group 2 of the periodic table of the elements, and/or at least one corresponding compound, and/or
at least one organic compound d) selected from monomers, oligomers, polymers, copolymers, and block copolymers, where the coating freshly applied with this composition is rinsed with an aqueous, surfactant-containing fluid and up until this rinsing is not dried right through, so that the at least one condensable compound a) does not condense greatly up until the rinsing.

2. The method according to claim 1, wherein coating freshly applied with the composition is not dried right through up until the applying of a subsequent coating, so that the at least one condensable compound a) does not condense greatly up until the applying of the subsequent coating.

3. The method according to claim 2, wherein the subsequent coating is a second conversion coat, a coating arising from application of an afterrinse solution, or a coating based on a paint, a paintlike composition, a primer or an adhesive.

4. The method according to any of the preceding claims, wherein the pH of the composition is greater than 1.5 and less than 9.

5. The method according to any of the preceding claims, wherein the composition has a silane/silanol/siloxane/polysiloxane a) content in the range from 0.005 to 80 g/L, calculated on the basis of the corresponding silanols.

6. The method according to any of the preceding claims, wherein the composition comprises at least one silane and/or the corresponding silanol/siloxane/polysiloxane having in each case at least one amino group, urea group and/or ureido group.

7. The method according to any of the preceding claims, wherein the composition has a complex fluoride content in the range from 0.01 to 100 g/L, calculated as the sum total of the corresponding metal complex fluorides, calculated as MeF₆.

8. The method according to any of the preceding claims, wherein the composition comprises at least one kind of cation c) selected from cations of cerium, chromium, iron, calcium, cobalt, copper, magnesium, manganese, molybdenum, nickel, niobium, tantalum, yttrium, zinc, tin, and further lanthanides.

9. The method according to any of the preceding claims, wherein the composition has a content of cations and corresponding compounds c) in the range from 0.01 to 20 g/L, calculated as the sum of the metals.

10. The method according to any of the preceding claims, wherein the composition has an organic compound d) content in the range from 0.01 to 200 g/L, calculated as the sum of the corresponding compounds.

11. The method according to any of the preceding claims, wherein a mix of different metallic materials is coated with the aqueous coating in the same bath.

12. The method according to any of the preceding claims, wherein the coating formed with the composition is situated in the range from 1 to 200 mg/m², based only on titanium and/or zirconium, calculated as titanium.

13. The method according to any of the preceding claims, wherein the coating formed with the composition has a film weight which is in the range from 0.2 to 1000 mg/m², based only on siloxanes/polysiloxanes, calculated as the corresponding largely fully condensed polysiloxane.

14. The method according to any of the preceding claims, wherein before the silane pretreatment according to any of the preceding claims, preliminary rinsing and/or first silane coating are/is performed with an aqueous composition which comprises at least one silane, at least one compound selected from fluoride-free compounds of titanium, hafnium, and zirconium, at least one relatively highly dilute aqueous alkali and/or at least one complex fluoride.

15. The method according to any of the preceding claims, wherein, after the silane pretreatment, at least one rinse is performed with an aqueous composition which comprises not only water and which comprises a surfactant for evening out the wet film.

16. The method according to any of the preceding claims, wherein the coating produced with an aqueous composition is subsequently coated with at least one primer, paint, adhesive and/or with a paintlike organic composition, where optionally at least one of these further coatings is cured by heating and/or irradiation.

17. The use of the metallic substrates coated by the method according to any of claims 1 to 16 in the automotive industry, for rail vehicles, in the aerospace industry, in apparatus construction, in mechanical engineering, in the building industry, in the furniture industry, for producing vehicle barriers, lamps, profiles, linings or small parts, for producing bodywork or bodywork parts, individual components, preassembled and/or connected elements preferably in the automotive or aeronautical industry, for producing appliances or installations, especially household appliances, control devices, testing devices or structural elements.

## Revendications

1. Procédé de revêtement de surfaces métalliques avec une composition contenant un silane/silanol/siloxane/polysiloxane, la composition contenant outre de l'eau et éventuellement outre au moins un solvant organique et/ou au moins une substance influençant le pH,
au moins un composé a) choisi parmi les silanes, les silanols, les siloxanes et les polysiloxanes, parmi lesquels au moins un de ces composés peut encore être condensé,
au moins deux fluorures complexes b) choisis parmi les fluorures complexes de titane, d'hafnium et de zirconium, et éventuellement également
au moins un type de cations c), choisis parmi les cations de métaux des groupes de transition 1 à 3 et 5 à 8, y compris les lanthanides, ainsi que du groupe principal 2 du tableau périodique des éléments, et/ou au moins un composé correspondant, et/ou
au moins un composé organique d) choisi parmi les monomères, les oligomères, les polymères, les copolymères et les copolymères séquencés,
le revêtement fraîchement appliqué avec cette composition étant rincé avec un fluide aqueux contenant des tensioactifs et n'étant pas séché jusqu'à ce rinçage, de telle sorte que ledit au moins un composé condensable a) ne soit pas fortement condensé jusqu'au rinçage.

2. Procédé selon la revendication 1, **caractérisé en ce que** le revêtement fraîchement appliqué avec la composition n'est pas séché jusqu'à l'application d'un revêtement suivant, de telle sorte que ledit au moins un composé condensable a) ne soit pas fortement condensé jusqu'à l'application du revêtement suivant.

3. Procédé selon la revendication 2, **caractérisé en ce que** le revêtement suivant est une deuxième couche de conversion, un revêtement à la suite de l'application d'une solution de rinçage secondaire ou un revêtement à base d'un vernis, d'une composition semblable à un vernis, d'un agent primaire ou d'un adhésif.

4. Procédé selon l'une quelconque des revendications précédentes, **caractérisé en ce que** le pH de la composition est supérieur à 1,5 et inférieur à 9.

5. Procédé selon l'une quelconque des revendications précédentes, **caractérisé en ce que** la composition présente une teneur en silane/silanol/siloxane/polysiloxane a) dans la plage allant de 0,005 à 80 g/l, calculée en termes des silanols correspondants.

6. Procédé selon l'une quelconque des revendications précédentes, **caractérisé en ce que** la composition contient au moins un silane et/ou le silanol/siloxane/polysiloxane correspondant contenant à chaque fois au moins un groupe amino, un groupe urée et/ou un groupe uréido.

7. Procédé selon l'une quelconque des revendications précédentes, **caractérisé en ce que** la composition présente un teneur en fluorures complexes dans la plage allant de 0,01 à 100 g/l, calculée en tant que somme des fluorures complexes métalliques correspondants calculée en tant que MeF₆.

8. Procédé selon l'une quelconque des revendications précédentes, **caractérisé en ce que** la composition contient au moins un type de cations c), choisis parmi les cations de cérium, chrome, fer, calcium, cobalt, cuivre, magnésium, manganèse, molybdène, nickel, niobium, tantale, yttrium, zinc, étain et autres lanthanides.

9. Procédé selon l'une quelconque des revendications précédentes, **caractérisé en ce que** la composition présente une teneur en cations et composés correspondants c) dans la plage allant de 0,01 à 20 g/l, calculée en tant que somme des métaux.

10. Procédé selon l'une quelconque des revendications précédentes, **caractérisé en ce que** la composition présente une teneur en composés organiques d) dans la plage allant de 0,01 à 200 g/l, calculée en tant que somme des composés correspondants.

11. Procédé selon l'une quelconque des revendications précédentes, **caractérisé en ce qu'**un mélange de différents matériaux métalliques est revêtu avec le revêtement aqueux dans le même bain.

12. Procédé selon l'une quelconque des revendications précédentes, **caractérisé en ce qu'**un revêtement est formé avec la composition, qui au regard uniquement du titane et/ou du zirconium se situe dans la plage allant de 1 à 200 mg/m², calculé en tant que titane.

13. Procédé selon l'une quelconque des revendications précédentes, **caractérisé en ce qu'**un revêtement est formé avec la composition, ayant un poids de couche qui, au regard uniquement des siloxanes/polysiloxanes, se situe dans la plage allant de 0,2 à 1 000 mg/m², calculé en tant que polysiloxane largement condensé correspondant.

14. Procédé selon l'une quelconque des revendications précédentes, **caractérisé en ce qu'**avant le prétraitement par un silane selon l'une quelconque des revendications précédentes, un pré-rinçage et/ou un premier revêtement par un silane sont également réalisés, avec une composition aqueuse qui contient au moins un silane, au moins un composé choisi parmi les composés sans fluorure de titane, d'hafnium et de zirconium, au moins une base fortement diluée et/ou au moins un fluorure complexe.

15. Procédé selon l'une quelconque des revendications précédentes, **caractérisé en ce qu'**après le prétraitement par un silane, au moins un rinçage est réalisé avec une composition aqueuse, qui ne contient pas uniquement de l'eau et qui contient au moins un tensioactif pour l'uniformisation du film humide.

16. Procédé selon l'une quelconque des revendications précédentes, **caractérisé en ce que** le revêtement fabriqué avec une composition aqueuse est ensuite revêtu avec au moins un agent primaire, un vernis, un adhésif et/ou avec une composition organique semblable à un vernis, au moins un de ces revêtements supplémentaires étant éventuellement durci par chauffage et/ou exposition à un rayonnement.

17. Utilisation des substrats métalliques revêtus par le procédé selon l'une quelconque des revendications 1 à 16 dans l'industrie automobile, pour des véhicules ferroviaires, dans l'industrie aéronautique et astronautique, dans la construction d'appareils, dans la construction de machines, dans le bâtiment, dans l'industrie des meubles, pour la fabrication de glissières de sécurité, de lampes, de profilés, d'habillages ou de pièces de petite taille, pour la fabrication de carrosseries ou de parties de carrosseries, de composants individuels, d'éléments pré-montés ou reliés, de préférence dans l'industrie automobile ou aéronautique, pour la fabrication d'appareils ou d'unités, notamment d'appareils ménagers, de dispositifs de contrôle, de dispositifs de tests ou d'éléments de construction.
